(19)

Europäisches
Patentamt
European
Patent Office
Office européen
des brevets

(11) **EP 4 331 379 A1**

(12) **EUROPEAN PATENT APPLICATION**
published in accordance with Art. 153(4) EPC

(43) Date of publication:
**06.03.2024 Bulletin 2024/10**

(21) Application number: **22796183.6**

(22) Date of filing: **28.04.2022**

(51) International Patent Classification (IPC):
*A23L 7/196* (2016.01)     *A23L 31/00* (2016.01)
*A23L 25/00* (2016.01)     *A23L 3/10* (2006.01)
*A23L 3/015* (2006.01)     *B65B 55/14* (2006.01)
*B65B 25/00* (2006.01)

(52) Cooperative Patent Classification (CPC):
**A23L 3/015; A23L 3/10; A23L 7/196; A23L 25/00;
A23L 31/00; B65B 25/00; B65B 55/14**

(86) International application number:
**PCT/KR2022/006110**

(87) International publication number:
**WO 2022/231351 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.04.2021 KR 20210056072**

(71) Applicant: **CJ Cheiljedang Corporation
Seoul 04560 (KR)**

(72) Inventors:
• **OH, Ye Jin
Seoul 04560 (KR)**
• **JANG, Il Sang
Seoul 04560 (KR)**

• **KIM, Eun Hye
Seoul 04560 (KR)**
• **PARK, Hyeong Seon
Seoul 04560 (KR)**
• **JEONG, Hyo Young
Seoul 04560 (KR)**
• **CHOI, Hye Mi
Seoul 04560 (KR)**
• **JEONG, Sung Yoon
Seoul 04560 (KR)**
• **YOON, In Won
Seoul 04560 (KR)**

(74) Representative: **Handley, Matthew Edward et al
Venner Shipley LLP
200 Aldersgate
London EC1A 4HD (GB)**

(54) **METHOD FOR PREPARING INSTANT RICE HAVING TASTE, NUTRITIONAL VALUE, AND
TEXTURE OF HOT POT RICE**

(57)     The present application relates to a method for
preparing an instant rice and an instant rice prepared
thereby, wherein even when the instant rice is prepared
using raw ingredients that are susceptible to microbial
contamination or difficult to sterilize, the amount of mi-
croorganisms in the prepared instant rice is lower than a
threshold value, and thus a sufficient sterilization effect
can be achieved, and the problem of reducing Bap quality
that may cause due to strict sterilization does not occur,
and thus an instant rice having excellent texture and taste
quality can be provided.

【Figure 1】

EP 4 331 379 A1

## Description

[Technical Field]

The present application relates to a method for preparing an instant rice and an instant rice prepared thereby.

[Background Art]

Cooked grains (Bap) is a staple food in East Asia including Korea, Japan and China, and is a type of food commonly eaten throughout Asia including Southeast Asia and South Asia. In recent years, the number of people consuming the Bap has increased not only in Asia but also in Western countries, and the Bap has now become a popular food even in Western countries. In particular, rice, a main raw ingredient of the Bap, is becoming more popular as it is known that the rice is nutritionally excellent.

Generally, Bap may be cooked and prepared by washing grains such as rice in water, soaking the grains, then removing water and heating the grains. However, in order to cook rice properly, it is important to accurately measure and use the amount of water according to the amount of grains, and depending on heating conditions and methods, the final taste or texture of Bap may vary greatly, and thus skilled skill or experience is required to make Bap above a certain level. Since it is not easy to cook the consistent and high-quality Bap, electric rice cookers have been developed only for the purpose of cooking Bap. Since the Bap is a type of food eaten as a staple food, the Bap needs to be cooked every day or in large quantities, but has a disadvantage that the cooking process is cumbersome and not easy. In particular, with the recent trend of increasing single-person households and developing dining culture, the number of people who want to cook and eat the Bap at home through the cumbersome process is decreasing, and on the contrary, the demand for an instant rice in the form of instant food is increasing.

The instant rice is sold as cooked rice in a package, and thus there is an advantage that consumers who purchase the instant foo may eat the instant food right away, and easily enjoy high-quality Bap through a simple cooking process using a microwave, etc. However, in instant foods that are distributed for a long period of time and stored at room temperature, there is a high need to control microbial contamination through sufficient sterilization. If excessive sterilization conditions are applied to sterilize instant rice, the quality of Bap may be damaged and deteriorated. Therefore, it is an important problem to solve in the field of instant rice to achieve a sterilization effect while maintaining the quality of Bap.

The solving of the above problems becomes more important in instant rice, which uses more raw ingredients other than white rice even in the instant rice. When using raw ingredients that contain a lot of moisture or are susceptible to microbial contamination, sterilization is difficult and quality deterioration due to sterilization is noticeable, so that the need for sterilization and quality control is particularly emerging. In the case of a mixed rice in the form of the instant rice on the market, since raw ingredients vulnerable to microbial contamination are use, even if the sterilization conditions are satisfied, the quality of Bap is significantly reduced to have poor texture and taste in many cases. Korean Laid-open Patent Publication No. 10-2015-0105819 discloses a method for preparing sterile packaged instant flavored glutinous rice containing nuts, and a method of first cooking flavored glutinous rice by mixing ingredients, and then heating the rice to high temperature to sterilize and package the rice, and thus, it discloses only a method without considering a problem of deterioration of Bap quality due to sterilization at all. Recently, the convenience food market is gradually increasing, and as the demand for various types of the instant food in addition to the existing white rice Bap increases, a demand for the instant food having similar quality to food cooked at home or in restaurants and a need for development thereof are also increasing.

[Prior Art Document]

[Patent Document]

(Patent Document 1) Korean Laid-open Patent Publication No. 10-2015-0105819

[Disclosure]

[Technical Problem]

In is an object of the present application to provide a method for preparing an instant rice so that the quality of Bap is not damaged due to sterilization even while reducing the number of microorganisms below a threshold value through sufficient sterilization when preparing the instant rice prepared using raw ingredients that are susceptible to microbial contamination and difficult to sterilize.

It is another object of the present application to provide an instant rice having excellent quality that embodied the taste, nutritional value, and texture of hot pot rice even while containing microorganisms below a threshold value through sufficient sterilization as described above.

[Technical Solution]

An aspect of the present application provides a method for preparing an instant rice including: sterilizing raw ingredients filled in a container under conditions of F0 value of 4 or higher; adding sterilized water or sterilized sauce to the sterilized raw ingredients; sealing a container added with the water or sauce; and heating the sealed container at a temperature of 90°C to 125°C for 10 to 25 minutes.

Another aspect of the present application provides an instant rice prepared by the instant rice preparation method described above.

Hereinafter, the present application will be described in detail.

The term "cooked grains (Bap)" used herein refers to all foods prepared by adding water to grains, pressurizing, and heating the grains. When compared to porridge, the Bap is maintained in the form of grains, characterized to be chewed and eaten, and has a feature of having less moisture than porridge. The Bap may be commonly taken as a staple food in East Asia including Korea and Southeast Asia, and mainly prepared using rice, but may be prepared with other grains instead of rice, or prepared by mixing rice with other grains, or may be prepared using additional ingredients other than grains.

The term "instant rice" used herein means Bap made in the form of an instant food. The instant rice is a processed food that is able to be eaten in itself without a separate cooking process, or eaten through a simpler cooking process than a conventional method of preparing and cooking Bap, and prepared for convenient storage, reposition, transportation, and portability.

**Method for preparing instant rice**

A method for preparing instant rice of the present application includes: sterilizing raw ingredients filled in a container under conditions of F0 value of 4 or higher; adding sterilized water or sterilized sauce to the sterilized raw ingredients; sealing a container added with the water or sauce; and heating the sealed container at a temperature of 90°C to 125°C for 10 to 25 minutes.

Although the instant rice prepared through the preparing method of the present application is in the form of instant rice, the instant rice may exhibit excellent quality that embodied the taste, nutritional value, texture, etc. of hot pot rice. The hot pot rice refers to Bap cooked using a pot, and specifically, may be Bap cooked in a pressure rice pot or an iron pot, particularly a stone pot and an iron pot such as a cast iron pot, to embody more improved texture.

The raw ingredients may include any ingredient as long as it may be commonly used to make Bap, and the type of raw ingredients may be appropriately selected and used depending on the type of Bap to be prepared.

Specifically, the raw ingredients may include at least one selected from the group consisting of grains, beans, mushrooms, root and tuber crops, bulbs, seasoned vegetables, fruits/seeds, meat, fish, and eggs. The grains may include rice or mixed grains other than rice, and the rice may include at least one selected from the group consisting of white rice, black rice, brown rice, non-glutinous rice, and glutinous rice. The mixed grains may include at least one selected from the group consisting of barley, soybeans, red beans, foxtail millet, wheat, rye, bran, buckwheat, oats, millet, corn, and sorghum. However, the type of mixed grain is not limited thereto, and any mixed grain may be used as long as it may be commonly used in the preparation of Bap, and for example, any mixed grain may be used as long as it is used for the preparation of mixed grain rice or nutritious rice. The instant rice of the present application may be prepared using only raw ingredients other than white rice, or may be used with both white rice and raw ingredients other than white rice. The beans may include at least one selected from the group consisting of white beans, green kernel black beans, black beans, yellow beans, medicinal beans, kidney beans, peas, black azuki beans, mung beans, lentils, horse beans, and red beans, but are not limited thereto, and the beans may include all edible plants classified as the legume family. The mushrooms may include at least one selected from the group consisting of king oyster mushroom, shiitake mushroom, oyster mushroom, button mushroom, and enoki mushroom. However, the type of mushroom is not limited thereto, and any edible mushroom may be used without limitation, and for example, any mushroom may be used as long as it is used for preparing mushroom rice. The bulbs may include at least one selected from the group consisting of lotus root, burdock, carrot, and bellflower root, but are not limited thereto. The root and tuber crops may include at least one selected from the group consisting of sweet potatoes, potatoes, and pork potatoes, but are not limited thereto. The seasoned vegetables may include at least one selected from the group consisting of seasoned aster, seasoned thistle, bracken fern, sedum, groundsel, chives, thunberg onion, butterbur, wild garlic, purslane, and aralia, but are not limited thereto. The fruits/seeds may include at least one selected from the group consisting of jujubes, chestnuts, pine nuts, raisins, and pumpkin seeds, but are not limited thereto. The meats may include lean meat, muscle, fat, or mixtures thereof isolated from at least one animal selected from the group consisting of cattle, horse, sheep, goat, deer, and poultry (chicken, duck, geese, turkey, ostrich, turkey, and pheasant), but are not limited thereto. The fish meat includes meat isolated from marine products, eggs of marine products, or foods processed thereof, and for example, may be raw meat isolated from marine products, paste, fish cake, fish meat sausage, etc., but is not limited thereto. The marine products may be fish (cod, pollack, croaker, mackerel, Spanish mackerel, saury, etc.), squid, octopus, octopus minor, shrimp, crab, clam meat, etc., and the roes of the marine products may be pollack roe, cod roe, flying fish roe, shark roe, etc., but are not limited thereto. The eggs include foods obtained from eggs obtained from animals, such as poultry eggs or egg processed products, and may all include eggs, whole eggs, egg yolk, egg white, etc. Specifically, the eggs may be eggs, duck eggs, quail eggs, goose eggs, ostrich eggs, or processed products thereof, but are not limited thereto.

The raw ingredients may include raw ingredients other than white rice (e.g., grains other than white rice, beans, mushrooms, root and tuber crops, seasoned vegetables, fruits/seeds, meats, fish meat, eggs, etc.) in an amount of 10 to 100 parts by weight based on 100 parts by weight of the total raw ingredients. Specifically, the content of the raw ingredients other than white rice may be in a range consisting of a lower limit selected from 10 parts by weight, 15 parts by weight, 20 parts by weight, 25 parts by weight, 30 parts by weight, 35 parts by weight, 40 parts by weight, 45 parts by weight, 50 parts by weight, 55 parts by weight, and 60 parts by weight, and/or an upper limit selected from 100 parts by weight, 95 parts by weight, 90 parts by weight, 85 parts by weight, 80 parts by weight, 75 parts by weight, 70 parts by weight, and 65 parts by weight. For example, the content of the raw ingredients other than white rice may be 10 to 100 parts by weight, 15 to 95 parts by weight, 20 to 90 parts by weight, 30 to 85 parts by weight, 40 to 80 parts by weight, 50 to 80 parts by weight, 60 to 70 parts by weight, or 60 to 65 parts by weight, but is not limited thereto. When the content of the raw ingredients other than white rice is 100 parts by weight, the raw ingredients may not contain white rice at all, and in this case, an instant rice prepared using the raw ingredients may not also contain white rice at all. The "rice", a concept that includes white rice, black rice, brown rice, etc., may be any rice as long as it is commonly used for preparing Bap regardless of its type, and may be, for example, japonica or indica rice, but is not limited thereto. In addition, the rice may be non-glutinous rice, glutinous rice, or a combination thereof. The non-glutinous rice may contain starch ingredients of amylose and amylopectin, and the glutinous rice starch may contain starch ingredient of amylopectin. Compared to the non-glutinous rice, the glutinous rice may have more stickiness of Bap when cooking the rice. In addition, the rice may be used regardless of its degree of polishing, and may be 50% polished rice, 70% polished rice, and/or 90% polished rice, in addition to the white rice and brown rice. The types of rice described above may be appropriately selected depending on the type and characteristics of Bap to be finally prepared, and the mixing ratio of each type of rice may also be appropriately selected and used.

In the present application, the raw ingredients used in the preparation of an instant rice are susceptible to microbial contamination because the number of microorganisms contained therein is greater than the number of microorganisms contained in other raw ingredients, or may not be sufficiently sterilized through a conventional sterilization process. Specifically, the raw ingredients may have the number of microorganisms of $10^2$ cfu/ml to $10^8$ cfu/ml in the raw ingredients before sterilization, and for example, the number of microorganisms may be in the range of $10^3$ cfu/ml to $10^7$ cfu/ml, 1,500 cfu/ml to 5,000,000 cfu/ml or 1,800 cfu/ml to 4,500,000 cfu/ml. In addition, the number of microorganisms in the raw ingredients before sterilization may be the number of microorganisms measured before sterilizing a mixture of two or more raw ingredients. The number of microorganisms in the raw ingredient mixture before sterilization may be $10^5$ cfu/ml to $10^8$ cfu/ml, and for example, the number of microorganisms in the raw ingredient mixture before sterilization may be 500,000 cfu/ml to 5,000,000 cfu/ml or 550,000 cfu/ml to 1,200,000 cfu/ml. Accordingly, when considering an effect on the health of people who eat instant rice and a legal acceptable level of the number of microorganisms in instant rice, in order to meet the standard by reducing the number of microorganisms contained in instant rice prepared using the raw ingredients, stricter sterilization may be required than when using other raw ingredients. However, when instant rice is prepared through strict sterilization conditions and sterilization methods, microbial contamination may be controlled, but there is a problem that the quality of instant rice may decrease due to the sterilization process. The present application is an invention intended to solve the problems that occur when preparing instant rice using the raw ingredients, and the instant rice prepared according to the method for preparing the instant rice of the present application has an effect of not deteriorating the quality of the instant rice even while exhibiting a sufficient sterilization effect.

In the present application, the term "F value" refers to the time required to kill a specific microbial strain at a specific temperature, which may be calculated through a heat lethal time curve for the microorganism. The F value may be determined according to a Z value and a heating temperature according to a type of microorganism to be sterilized. Among them, "F0 value" may be defined as the F value when a Z value is 18°F or 10°C and the heating temperature is 250°F or 121.1°C. The Z value of 10°C is based on the value when sterilizing a standard microbial strain. The F0 value is a value that may be used as a measure of the level of sterilization in the art. Specifically, the F0 value may be measured by a probe of a sensor, which is a cumulative amount of heat transferred to a sample during the heat treatment time. For example, the F0 value may be measured by inserting the probe of the sensor into a cold point (a point where heat is transferred last within the sample or generally the center of the sample) in the sample and then checking the cumulative amount of heat to be transferred during heat application, and may be converted and calculated by setting the amount of heat corresponding to 121.1°C and 1 minute to 'F0 = 1'.

In the method for preparing the instant rice of the present application, the raw ingredients filled in the container are sterilized under conditions of an F0 value of 4 or higher. At this time, when describing the meaning of sterilization under the condition of 'F0 value = 4' as an example, according to the definition of the F0 value, it means sterilizing standard microorganisms with Z value of 10°C to a level that may kill the microorganisms when sterilization is performed at a temperature of 121.1°C for 4 minutes. The F0 value may be calculated according to Equation 1 below.

[Equation 1]

$$F_0 = t(time) \times 10^{\frac{T(Temperature) - 121.1°C}{10°C}}$$

wherein, the unit of t (time) is minute, and the unit of T (temperature) is °C.

Specifically, the sterilizing step may be performed at an F0 value of 4 or more, 4.5 or more, 5 or more, 6 or more, 7 or more, 8 or more, 10 or more, 20 or more, 30 or more, or 40 or more, but is not limited thereto. When the sterilization is performed under a condition in the range of the F0 value or more, as instant rice is prepared through the subsequent steps, the number of microorganisms contained in the final instant rice product may fall below a threshold value to exhibit a sufficient sterilization effect.

The sterilizing step may be performed using at least one method selected from the group consisting of pressurized steam sterilization, vacuum pressurized steam sterilization, and ultra-high temperature sterilization, but is not limited thereto, and any sterilization method can be used as long as it can satisfy the condition of the F0 value of 4 or more. Specifically, the sterilizing step may be performed using a pressure sterilizer (Shinwha, Japan), a vacuum pressure sterilizer (RIC device, Hisaka, Japan), or an ultra-high pressure sterilizer (Echico, Japan), but is not limited thereto. More specifically, the sterilizing step may be performed by directly applying steam to the raw ingredients, and may be performed using a vacuum pressurized steam sterilization method. The vacuum pressurized steam sterilization may be performed sequentially by vacuum, steam sterilization, reduced pressure, and vacuum cooling, for example, the vacuum pressurized sterilizer may be used. More specifically, the raw ingredients may be placed in the vacuum pressurized sterilizer, and then subjected subsequently to steam sterilization, reduced pressure, and vacuum cooling after the interior of the vacuum pressurized sterilizer is made in a vacuum state. The raw ingredients may be raw ingredients filled in an unsealed container. The interior of the vacuum pressurized sterilizer is made in the vacuum state before steam sterilization, thereby achieving heat transfer efficiency (rapid heat transfer) and homogeneity during steam sterilization.

The sterilizing step may be performed with steam at 120°C to 140°C for 1 to 10 minutes. Specifically, the steam temperature may be a temperature in the range consisting of a lower limit selected from 120°C, 121°C, 122°C, 123°C, 124°C, 125°C, 126°C, 127°C, 128°C, 129°C, and 130°C, and/or an upper limit selected from 140°C, 139°C, 138°C, 137°C, 136°C, 135°C, 134°C, 133°C, 132°C, 131°C, and 130°C. For example, the sterilizing step may be performed with steam at 120°C to 140°C, 121°C to 139°C, 122°C to 138°C, 123°C to 137°C, 124°C to 136°C, 125°C to 135°C, 126°C to 134°C, 127°C to 133°C, 128°C to 132°C, 129°C to 131°C, 129°C to 130°C or 130°C to 131°C, but is not limited thereto. The sterilization time may be the time in the range of a lower limit selected from 1 minute, 2 minutes, 3 minutes, 4 minutes, 4 minutes and 30 seconds, 5 minutes, 5 minutes and 30 seconds, 6 minutes, 6 minutes and 30 seconds and 7 minutes, and/or an upper limit selected from 10 minutes, 9 minutes 30 seconds, 9 minutes, 8 minutes 30 seconds, 8 minutes, 7 minutes 30 seconds, 7 minutes, 6 minutes 30 seconds, and 6 minutes. For example, the sterilization may be performed for 1 minute to 10 minutes, 2 minutes to 9 minutes, 3 minutes to 8 minutes, 4 minutes to 7 minutes, 5 minutes to 6 minutes, 5 minutes 30 seconds to 6 minutes, 5 minutes to 5 minutes 30 seconds, 6 minutes to 10 minutes, 7 minutes to 10 minutes, or 7 minutes to 9 minutes, but is not limited thereto, and the sterilization time may vary within the above range depending on the volume of raw ingredients to be sterilized. For example, when preparing the instant rice in a volume suitable for one meal per person, the sterilization time may be generally 4 minutes to 6 minutes, and when preparing the instant rice in a larger volume than the volume for one meal per person, the sterilization time may be increased to a range of 7 minutes to 10 minutes and may be appropriately changed depending on the volume.

In addition, the sterilizing step may be performed by repeatedly contacting the raw ingredients 5 to 10 times with steam at 140°C to 155°C for 3 to 10 seconds. Specifically, the steam temperature may be in the range consisting of a lower limit selected from 140°C, 142°C, 145°C, and 147°C and/or an upper limit selected from 155°C, 153°C, 150°C, and 148°C. For example, the sterilization may be performed with steam at 140°C to 155°C, 142°C to 153°C, 145°C to 150°C, 145°C to 148°C, 147°C to 150°C or 147°C to 148°C, but is not limited thereto. The steam contacting time may be the time consisting of a lower limit selected from 3 seconds, 4 seconds, 5 seconds and 6 seconds and/or an upper limit selected from 10 seconds, 9 seconds, 8 seconds and 7 seconds. For example, the steam contacting time may be 3 seconds to 10 seconds, 4 seconds to 9 seconds, 5 seconds to 8 seconds, 6 seconds to 8 seconds, 5 seconds to 7 seconds, or 6 seconds to 7 seconds, but is not limited thereto. The contacting of the raw ingredients with the steam may be repeated 5 to 10 times, 6 to 9 times, 6 to 8 times, 7 to 9 times, or 7 to 8 times.

The method for preparing the instant rice of the present application may further include a step of immersing the raw ingredients in water, before filling the raw ingredients in the container. The immersing step may include washing the raw ingredients with water, and for example, the raw ingredients may be immersed for 20 minutes to 80 minutes by adding 200 parts by weight to 300 parts by weight of water with respect to total 100 parts by weight of the washed raw ingredients, but it is not limited thereto. The immersing step may be generally performed in the same manner as a process of soaking grains in water when cooking and preparing Bap.

After the immersing step, a step of removing water may be further performed before filling the raw ingredients in the container. As a result of performing the step of removing water, before the sterilizing step, 0 to 10 parts by weight of water based on 100 parts by weight of the raw ingredient may be filled together in the container.

The method for preparing the instant rice of the present application includes a step of adding sterilized water or sterilized sauce to the sterilized raw ingredients after the sterilizing step, wherein the amount of sterilized water to be added may be used without limitation as long as the amount of water is within the range used generally when preparing rice. For example, after water is added, sterilized water may be added so that the amount of water may be added to be 30 parts by weight to 120 parts by weight based on 100 parts by weight of raw ingredients, specifically 30 parts by weight to 110 parts by weight, 40 parts by weight to 105 parts by weight, 50 parts by weight to 100 parts by weight, 60 parts by weight to 95 parts by weight, or 70 parts by weight to 90 parts by weight. Considering the amount of water contained in the container as a result of immersing the raw ingredients in water and then removing the water, the amount of water may be added by appropriately adjusting so that the amount of water within the above range may be ultimately contained in the container.

The adding of the sterilized sauce may be adding the sterilized water and the sterilized sauce together or adding only the sterilized sauce. The sauce may be a liquid sauce and may vary depending on a type or characteristics of the instant rice to be prepared, and for example, the sauce may include soy sauce, garlic, green onions, sugar, salt, sesame oil, honey, or combinations thereof.

In the step of adding the sterilized water or sterilized sauce, the sterilization may be performed for 6 to 8 minutes by directly spraying steam at 130°C to 140°C on the water or sauce. Specifically, the steam temperature may be a temperature in the range consisting of a lower limit selected from 130°C, 130.5°C, 131°C, 131.5°C, 132°C and 132.5°C and/or an upper limit selected from 140°C, 139°C, 138°C, 137°C, 136°C, 135°C, 134.5°C, 134°C, 133.5°C, 133°C and 132.5°C. For example, the sterilization may be performed with steam at 130°C to 140°C, 130.5°C to 138°C, 131°C to 136°C, 131.5°C to 135°C, 132°C to 133°C, 132.5°C to 135°C or 130° to 132.5°C, but is not limited thereto. The sterilization of the water or sauce may be performed by directly spraying and injecting the steam at the above temperature into the water or sauce to raise the temperature, and then passing the water or sauce through a pipe that maintains heat for 6 to 8 minutes. Specifically, the sterilization time after the steam injection may be 6 minutes to 8 minutes, 6 minutes 30 seconds to 8 minutes, 6 minutes to 7 minutes 30 seconds, 6 minutes 30 seconds to 7 minutes 30 seconds, 7 minutes to 8 minutes, or 6 minutes to 7 minutes. The sterilization by directly spraying the steam into the water or sauce may be performed using a direct steam injection heater (DSI).

The sterilizing method of the water or sauce described above may be more effective in sterilizing the sauce. Since the liquid sauce further contains other ingredients in addition to water, there is a problem in that the liquid sauce is more susceptible to microbial contamination than general water or may not be sufficiently sterilized through a general sterilization process. Accordingly, stricter sterilization is required to reduce the number of microorganisms in the sauce to a threshold value or lower. When the sterilization is performed by directly spraying steam to the sauce through the sterilization method, a there is an effect that the quality of the sauce does not deteriorate by performing the sterilization under the condition in the range while a sufficient sterilization effect on the liquid sauce appears.

The method for preparing the instant rice of the present application may not include a cooking step. Specifically, the method may not include a cooking step in the steps before the sealing step after the sterilizing step. The cooking step generally refers to a process of heating the raw ingredients of Bap in the process of preparing rice, and for example, may be a step of heating to 90°C to 120°C. Since the method for preparing the instant rice of the present application does not include a cooking step, there is an effect capable of reducing the number of times of heating the raw ingredients and preventing the quality of the instant rice from being deteriorated by heating. In addition, since microorganisms may be introduced into the container before sealing the container, sterile conditions need to be observed to prevent microbial contamination, but when the cooking step is not included before the sealing step, there is an advantage that a process that requires compliance with sterile conditions may be shortened or the time to be maintained in sterile conditions may be reduced. Accordingly, there is an effect capable of reducing the cost of creating sterile conditions and lowering the possibility of microbial contamination.

The method for preparing the instant rice of the present application may not apply heat of 90°C or higher before the sealing step after the sterilization step. Specifically, the heat of 90°C or higher, 96°C or higher, 97°C or higher, 98°C or higher, 99°C or higher, 100°C or higher, 102°C or higher, 105°C or higher, 110°C or higher, 120°C or higher, 90°C to 120°C, 97°C to 117°C, 99°C to 120°C, 100°C to 117°C, 105°C to 115°C, or 115°C to 120°C is not applied, but it is not limited thereto. Since the method for preparing the instant rice of the present application does not include the step of heating in the temperature range before the sealing step, there is an effect capable of reducing the number of times of heating the raw ingredients and preventing the quality of the instant rice from being deteriorated by heating. In addition, since microorganisms may be introduced into the container before sealing the container, sterile conditions need to be observed to prevent microbial contamination, but when the step of heating in the temperature range is not included before the sealing step, there is an advantage that the time to be maintained in sterile conditions may be reduced. Accordingly, there is an effect capable of reducing the cost of creating sterile conditions and lowering the possibility of microbial contamination.

The meaning of "not applying heat" is a concept of including not only not applying heat in the above temperature range at all, but also temporarily applying heat in the temperature range for a short period of time ultimately to the same level as not applying heat according to common sense in the art. For example, even if the temporary heating is performed, it is included in the scope of the present application so long as no significant sterilization effect occurs or no change in Bap quality occurs. For example, the not applying heat may include applying heat in the above temperature range within 1 second, 2 seconds, 3 seconds, 5 seconds, 10 seconds, or 20 seconds, and may also include applying heat in the above temperature range two times or more for a short period of time.

In the method, a temperature of 89°C or lower may be maintained before the sealing step after the sterilizing step. Specifically, the temperature may be maintained at 89°C or lower, 88°C or lower, 87°C or lower, 85°C or lower, 80°C or lower, 75°C or lower, 70°C or lower, 10°C to 89°C, 15°C to 88°C, 20°C to 85°C, 25°C to 80°C, 20°C to 70°C, 20°C to 60°C or 20°C to 50°C, but is not limited thereto. In the method for preparing the instant rice of the present application, as the temperature in the above range is maintained before the sealing step, there is an effect capable of reducing the number of times of heating the raw ingredients and preventing the quality of the instant rice from being deteriorated by heating. In addition, since microorganisms may be introduced into the container before sealing the container, sterile conditions need to be observed to prevent microbial contamination, but when the temperature in the range is maintained before the sealing step, there is an advantage that the time required to maintain sterile conditions may be reduced. Accordingly, there is an effect capable of reducing the cost of creating sterile conditions and lowering the possibility of microbial contamination.

The meaning of "maintaining the temperature" is a concept including not only the case where the temperature in the above range is continuously maintained without interruption in time, but also the case where a temperature condition higher than the above temperature range is temporarily given for a short period of time, that is, the concept including the cases where the above temperatures are continuously maintained, and are ultimately the same under the technical common sense in the art. For example, even if the temperature condition higher than the above temperature range is temporarily given, it is included in the scope of the present application so long as no significant sterilization effect occurs or no change in the quality of Bap occurs. For example, the temperature condition higher than the above temperature range may be given for the time within 1 second, within 2 seconds, within 3 seconds, within 5 seconds, within 10 seconds, or within 20 seconds, and the temperature condition higher than the above temperature range may be given two times or more for a short period of time.

In the method for preparing the instant rice of the present application, the steps from the sterilizing step to the sealing step may be performed while maintaining sterile conditions. Since the container filled with sterilized raw ingredients and the like may be contaminated from external biological particles such as microorganisms and other non-living particles before sealing, there is a need to perform each process under controlled conditions of the contaminant particles floating in the air. The method of maintaining the sterile conditions may be applied without limitation as long as it is a method and condition commonly applied to the production of foods in the art, and specifically, the sterile conditions commonly applied to the preparation of processed foods, instant foods, retort foods, etc. may be applied. The sterile conditions may be maintained by performing each step in a clean room or clean booth, and for example, the process from the completion of the sterilization step to the start of the sealing step may be performed in a tunnel-shaped booth. In this case, the inflow of microorganisms may be prevented through clean air generated from a clean air generator (for example, a HEPA filter) installed in the booth, and the inside of the booth may be maintained at positive pressure.

The sealing step may include attaching a sterilized lid material, for example, a UV sterilized lid material, to the container, and may further include injecting inert gas into the container before sealing. The attaching of the container may be performed by the method of using heat, an adhesive, or pressure, but is not limited thereto. After the sealing step, external foreign substances or microorganisms may not be introduced into the container by a natural method, so that microbial contamination may be controlled, and sterile conditions may not be necessarily maintained in the subsequent steps. The container and the lid materials used in the method for preparing the instant rice of the present application may be used without limitation in shape, material, size, etc., as long as the container and the lid material may be commonly used in the preparation of instant food, and may be a container and a lid material that are not deformed or damaged even by heating to be subsequently performed. For example, the lid material may be a lead film, but is not limited thereto.

The method for preparing the instant rice of the present application includes heating the sealed container to a temperature of 90°C to 125°C for 10 minutes to 25 minutes. Specifically, the heating temperature may be a temperature in the range consisting of a lower limit selected from 90°C, 91°C, 92°C, 93°C, 94°C, 95°C, 96°C, 97°C, 98°C, 99°C, 100°C, 105°C, 107°C, 110°C, 112°C and 115°C and/or an upper limit selected from 125°C, 124°C, 123°C, 122°C, 121°C, 120°C, 119°C, 118°C, 117°C, 116°C and 115°C. For example, the heating may be performed at a temperature of 90°C to 125°C, 91°C to 125°C, 92°C to 124°C, 93°C to 124°C, 94°C to 123°C, 95°C to 123°C, 95° C to 122°C, 95°C to 121°C, 96°C to 121°C, 97°C to 121°C, 100°C to 120°C, 105°C to 119°C, 107°C to 118°C, 110°C to 115°C, 110°C to 118°C, 110°C to 116°C, or 112°C to 116°C, but is not limited thereto. The sterilization time may be a time in the range consisting of a lower limit selected from 10 minutes, 11 minutes, 12 minutes, 13 minutes, 14 minutes, 15 minutes, 16 minutes, 17 minutes, 18 minutes, 19 minutes and 20 minutes, and/or an upper limit selected from 25 minutes, 24 minutes, 23 minutes, 22 minutes, 21 minutes, and 20 minutes. For example, the heating may be performed for 10 minutes to 25 minutes, 11 minutes to 24 minutes, 12 minutes to 23 minutes, 15 minutes to 22 minutes, 17 minutes to 21 minutes, 19 minutes to 20 minutes, 20 minutes to 21 minutes, 12 minutes to 17 minutes, 13 minutes to 16 minutes, 18 minutes to 23 minutes, 19 minutes to 22 minutes, or 19 minutes to 21 minutes, but is not limited thereto. The temperature range and the time range may vary depending on the types of raw ingredients.

When the heating is performed according to the temperature range and the time, there is an advantage of enabling more complete microbial control by exhibiting additional sterilization effects. In addition, through the heating process under the conditions, the instant rice of the present application reaches a level similar to that of Bap prepared through the preparing process of conventional Bap to have the quality of Bap suitable for eating, and prevent the deterioration of the quality of Bap due to an excessive heating condition, thereby preparing instant rice with excellent quality.

The number of microorganisms in the raw ingredients measured after the heating step may be 0 cfu/ml. In the raw ingredients included in the instant rice prepared by the method for preparing the instant rice of the present application, general bacteria and heat-resistant bacteria are all killed, so that the number of microorganisms may be 0 cfu/ml. Accordingly, the method for preparing the instant rice of the present application has an advantage of exhibiting a sufficient sterilization effect without deteriorating the quality of the raw ingredients included in the instant rice.

In other words, instant rice prepared by the method for preparing the instant rice of the present application may be easy to cook and store as an instant food, and also may have a texture and taste quality similar to Bap prepared through a general rice recipe at home or in a restaurant. In addition, even if raw ingredients that are susceptible to microbial contamination or are not easy to sterilize are used, it is possible to prepare an instant rice in which the number of microorganisms may be controlled through sufficient sterilization and the quality of Bap does not deteriorate due to sterilization.

The temperature conditions of the heating step may be lower than the heating temperature for conventional retort sterilization, and specifically, may be lower than a retort sterilization heating temperature commonly used in preparing conventional instant rice. In addition, the temperature conditions of the heating step may be higher than the heating temperature during 'steaming', which is performed to transfer heat to the inside of the food in the general cooking process of Bap.

The heating step may be performed in a general retort apparatus by setting the temperature and time conditions to the above range, but is not limited thereto.

The method for preparing the instant rice of the present application may further include a step of cooling and drying after the heating step, and further include inspecting the appearance and condition of the prepared instant rice and/or packaging one or more instant rice. The cooling step may be cooling by natural wind, but is not limited thereto, and the inspecting step may be visual inspection or sampling inspection, but is not limited thereto.

### 2. Instant rice

The instant rice of the present application or the instant rice prepared by the method for preparing the instant rice of the present application may be prepared in the form of instant rice of whole grain rice, mushroom nutritious rice, honey glutinous rice, etc. according to the type and combination of raw ingredients.

### 2-1. Whole grain rice

Whole grain rice is an instant rice including a sealed container; and multi-grain rice made from mixed grains contained in the container, wherein the mixed grains include one or more selected from the group consisting of brown rice, black rice, whole wheat, oats, barley, beans, red beans, foxtail millet, and sorghum, and the multi-grain rice is contained in an amount of 90 parts by weight or more based on 100 parts by weight of the contents contained in the container, and the number of microorganisms in the instant rice may be negative within a shelf life.

The whole grain rice may further include raw ingredients commonly used when generally preparing whole grain rice in addition to the mixed grains listed above, and the mixed grains may not include white rice. The mixed grains include brown rice and black rice, and the brown rice may be at least one selected from the group consisting of non-glutinous brown rice and glutinous brown rice.

The mixed grains may be included in an amount of 90 parts by weight or more based on 100 parts by weight of the contents contained in the container. Specifically, the content of the grains may be 90 parts by weight or more, 91 parts by weight or more, 92 parts by weight or more, 93 parts by weight or more, 94 parts by weight or more, 95 parts by weight or more, 96 parts by weight or more, 97 parts by weight or more, 98 parts by weight, 99 parts by weight or more, 99.5 parts by weight or more, 99.9 parts by weight or more, 100 parts by weight, 90 parts by weight to 99.9 parts by weight, 90 parts by weight to 99.5 parts by weight, 90 parts by weight to 99 parts by weight, 91 parts by weight to 99 parts by weight, 92 parts by weight to 99 parts by weight, 93 parts by weight to 99 parts by weight, 94 parts by weight to 99 parts by weight, 95 parts by weight to 99 parts by weight, 96 parts by weight to 99 parts by weight, 97 parts by weight to 99 parts by weight, 98 parts by weight to 99 parts by weight, 90 parts by weight to 98 parts by weight, 91 parts by weight to 98 parts by weight, 92 parts by weight to 98 parts by weight, 93 parts by weight to 98 parts by weight, 94 parts by weight to 98 parts by weight, 95 parts by weight to 98 parts by weight, 96 parts by weight parts by weight to 98 parts by weight, or 97 parts by weight to 98 parts by weight, but is not limited thereto. When the content of mixed grains is 100 parts by weight, the instant rice of the present application may include only mixed grains, or may include only mixed grains other than white rice.

When the mixed grains include at least one selected from the group consisting of whole wheat and oats, the whole wheat or oats with burst surfaces among the whole wheat or oats in the multi-grain rice may be contained in an amount of 10 parts by weight or less, 9 wt% or less, 8 wt% or less, 7 wt% or less, 6 wt% or less, or 5 wt% or less based on 100 parts by weight of the entire whole wheat or oats. In the present application, the term "burst surface" may be defined as exposing 10% or more of the endosperm portion of a grain based on the entire surface area of the rice grain. In other words, in the instant rice of the present application, among the whole wheat or oat grains included therein, the endosperm portions thereof are exposed to be less than 10% of the surface area of each grain, so that the burst whole wheat or oat grains are 10% or less of the entire whole wheat or oat grains. Whole grain rice in the form of instant rice, which is available on the market, needs to pay special attention to microorganism control and sterilization, and to this end, when sterilizing instant rice under strict sterilization conditions, surface bursting may occur in grains such as whole wheat and oats where the grains are prone to bursting. If the surfaces of the grains burst, the appearance may not look good to the eye, which may reduce the preference of the appearance, and physical properties related to texture, including hardness, may also decrease, resulting in a decrease in the quality of instant rice. However, although the instant rice of the present application contains grains that may cause surface bursting, the instant rice has excellent texture and appearance quality due to a high proportion of grains with unburst surfaces, and even though the quality is not damaged, the number of microorganisms in instant rice is 0 CFU/ml, so that there is an effect that sterilization of microorganisms has been sufficiently performed.

The brown rice may be included in an amount of 30 to 70 parts by weight based on 100 parts by weight of the contents contained in the container. Specifically, non-glutinous brown rice may be included in an amount of 10 to 30 parts by weight based on 100 parts by weight of the contents contained in the container. In addition, glutinous brown rice may be included in an amount of 20 to 40 parts by weight based on 100 parts by weight of the contents contained in the container.

The black rice may be included in an amount of 5 to 15 parts by weight based on 100 parts by weight of the contents contained in the container.

At least one selected from the group consisting of the whole wheat and barley may be included in an amount of 5 to 15 parts by weight based on 100 parts by weight of the contents contained in the container.

The brown rice may be non-glutinous brown rice or glutinous brown rice. The non-glutinous brown rice may be added in a content of 5 parts by weight to 12 parts by weight based on 100 parts by weight of the contents when preparing the instant rice of the present application. The glutinous brown rice may be added in a content of 10 parts by weight to 20 parts by weight based on 100 parts by weight of the contents when preparing the instant rice of the present application.

The black rice may be added in a content of 3 parts by weight to 10 parts by weight based on 100 parts by weight of the contents when preparing the instant rice of the present application. The whole wheat may be added in a content of 3 parts by weight to 10 parts by weight based on 100 parts by weight of the contents when preparing the instant rice of the present application. The oats may be added in a content of 3 parts by weight to 10 parts by weight based on 100 parts by weight of the contents when preparing the instant rice of the present application.

The whole grain rice may contain 3 parts by weight to 7 parts by weight of dietary fiber based on 100 parts by weight of the contents contained in the container. In addition, the whole grain rice may contain 3.5 parts by weight to 10 parts by weight of proteins based on 100 parts by weight of the contents contained in the container.

The number of microorganisms in the whole grain rice may be 0 CFU/ml when measured at a time point of 9 months or less after the preparation of instant rice.

The chromaticity of grains in instant rice measured after heating the whole grain rice in a 700 W microwave for 1 minute to 3 minutes, 1 minute 30 seconds to 2 minutes 30 seconds, or 2 minutes may have L value of 20 to 25, a value of 4 to 7, and b value of 3 to 5.5.

The instant rice may have one or more of the following physical properties obtained by measuring the multi-grain rice included in the container using a physical property analyzer, after heating the instant rice in a 700 W microwave for 1 minute to 3 minutes and 1 minute 30 seconds to 2 minutes 30 seconds, more specifically for 2 minutes: (i) hardness of 25 to 35; (ii) elasticity of 33 to 38; (iii) adhesiveness of 29.5 to 31; and (iv) stickiness of 23.3 to 25.

### 2-2. Mushroom nutritious rice

The mushroom nutritious rice is instant rice including a sealed container; and mushroom rice made from grains and mushrooms contained in the container, wherein Bap in the mushroom rice is included in a content of 60 parts by weight to 90 parts by weight based on 100 parts by weight of the contents contained in the container, and the mushrooms in the mushroom rice is included in a content of 10 parts by weight to 30 parts by weight based on 100 parts by weight of the contents contained in the container, and the number of microorganisms in the instant rice may be negative within a shelf life.

The mushroom nutritious rice may further include raw ingredients generally used when preparing whole grain rice, in addition to the raw ingredients (grains and mushrooms) listed above, and the instant rice may further include white rice.

The Bap prepared by the grains may include rice, and further include at least one selected from the group consisting of barley, soybeans, red beans, foxtail millet, wheat, rye, bran, buckwheat, oats, millet, corn, and sorghum, as grains other than rice.

The mushrooms prepared by cooking the mushrooms may include at least one selected from the group consisting of king oyster mushroom, shiitake mushroom, oyster mushroom, button mushroom, and enoki mushroom.

The Bap in the mushroom rice or the Bap prepared from the grains may be included in a content of 60 parts by weight to 90 parts by weight based on 100 parts by weight of the contents contained in the container.

The mushrooms in the mushroom rice or the mushroom prepared by cooking the mushrooms may be included in a content of 10 parts by weight to 30 parts by weight based on 100 parts by weight of the contents contained in the container.

The non-glutinous rice may be added in a content of 40 parts by weight to 60 parts by weight based on 100 parts by weight of the contents when preparing the instant rice of the present application. In addition, the glutinous rice may be added in a content of 5 parts by weight to 15 parts by weight based on 100 parts by weight of the contents when preparing the instant rice of the present application.

The black rice may be added in a content of 1 part by weight to 7 parts by weight based on 100 parts by weight of the contents when preparing the instant rice of the present application.

The shiitake mushroom may be added in a content of 10 parts by weight to 25 parts by weight based on 100 parts by weight of the contents when preparing the instant rice of the present application. In addition, the king oyster mushroom may be added in a content of 10 parts by weight to 25 parts by weight based on 100 parts by weight of the contents when preparing the instant rice of the present application.

The mushroom nutritious rice may further include a liquid sauce, and the sauce may include a shiitake hot water extract.

The chromaticity of king oyster mushroom in the instant rice measured after heating the instant rice of the present application in a 700 W microwave for 1 minute to 3 minutes, 1 minute 30 seconds to 2 minutes 30 seconds, more specifically 2 minutes may have L value of 50 to 70, a value of 3 to 5, and b value of 15.5 to 16.5.

The king oyster mushroom may be included in the form having a length of 3 cm or more and a thickness of 6.5 mm or more.

The king oyster mushroom included in the instant rice of the present application, compared to the thickness of the king oyster mushroom in the raw ingredients state before preparing the instant rice, may have 25% or less or 21% to 25% of a thickness shrinkage of king oyster mushrooms measured after heating the instant rice in a 700 W microwave for 1 minute to 3 minutes, 1 minute 30 seconds to 2 minutes 30 seconds, more specifically 2 minutes.

The moisture content of mushrooms in the mushroom rice or mushrooms prepared by cooking the mushrooms may be 70% to 85%.

The king oyster mushroom included in the mushroom nutritious rice may have one or more of the following physical properties obtained by measuring the king oyster mushroom using a physical property analyzer, after heating the instant rice in a 700 W microwave for 1 minute to 3 minutes and 1 minute 30 seconds to 2 minutes 30 seconds, more specifically for 2 minutes: (i) tissue strength (max stress, $dyn/cm^2$) value of the king oyster mushroom of 160,000 to 220,000; and (ii) area value ($erg/cm^3$) of the king oyster mushroom of 18,000 to 28,000.

## 2-3. Honey glutinous rice

The honey glutinous rice is instant rice including a sealed container: and honey glutinous rice made from at least one raw ingredient selected from the group consisting of jujubes, nuts and raisins, rice and sauce contained in the container, wherein the raw ingredients other than rice in the honey glutinous rice are contained in an amount of 5 parts by weight to 20 parts by weight based on 100 parts by weight of the contents contained in the container, the nuts are contained in an amount of 7 parts by weight to 18 parts by weight based on 100 parts by weight of the contents contained in the container, and the number of microorganisms in the instant rice may be negative within a shelf life.

The rice may include at least one selected from the group consisting of white rice, black rice, brown rice, non-glutinous rice, and glutinous rice.

The nuts may be at least one selected from the group consisting of chestnuts, pine nuts, pumpkin seeds, and peanuts.

The raw ingredients other than rice in the honey glutinous rice may be contained in an amount of 5 parts by weight to 20 parts by weight based on 100 parts by weight of the contents filled in the container.

The nuts may be contained in an amount of 7 parts by weight to 18 parts by weight based on 100 parts by weight of the contents contained in the container.

The non-glutinous rice may be added in a content of 10 parts by weight to 20 parts by weight based on 100 parts by weight of the contents when preparing the instant rice of the present application. In addition, the glutinous rice may be added in a content of 55 parts by weight to 65 parts by weight based on 100 parts by weight of the contents when preparing the instant rice of the present application.

The chestnuts may be added in a content of 8 parts by weight to 18 parts by weight based on 100 parts by weight of the contents when preparing the instant rice of the present application. In addition, the pumpkin seeds may be added in a content of 0.5 parts by weight to 3.5 parts by weight based on 100 parts by weight of the contents when preparing the instant rice of the present application. In addition, the raisins may be added in a content of 1.5 parts by weight to 4.5 parts by weight based on 100 parts by weight of the contents when preparing the instant rice of the present application. In addition, the pine nuts may be added in a content of 0.5 parts by weight to 1.5 parts by weight based on 100 parts by weight of the contents when preparing the instant rice of the present application.

The honey glutinous rice may further include a liquid sauce, and the sauce may include honey.

The chromaticity of the rice in the honey glutinous rice may be L value of 33.5 to 36, a value of 5.5 to 6.5, and b value of 13.5 to 14.5. The chromaticity of the raw ingredients in the honey glutinous rice measured after heating the honey glutinous rice in a 700 W microwave for 1 minute to 3 minutes, 1 minute 30 seconds to 2 minutes 30 seconds, or 2 minutes may have L value of 27 to 29, a value of 6.5 to 7, and b value of 10 to 11.

The honey glutinous rice may have one or more of the following physical properties obtained by measuring the Bap in the honey glutinous rice included in the container using a physical property analyzer, after heating the honey glutinous rice in a 700 W microwave for 1 minute to 3 minutes and 1 minute 30 seconds to 2 minutes 30 seconds, more specifically for 2 minutes: (i) hardness of 15 to 35; (ii) elasticity of 40 to 60; (iii) adhesiveness of 25 to 40; and (iv) stickiness of 65 to 105.

[Advantageous Effects]

A method for preparing an instant rice according to the present application has an effect of being able to prepare an instant rice capable of exhibiting a sufficient sterilization effect due to the number of microorganisms in the final instant rice lower than a threshold value even when the instant rice is prepared using raw ingredients that are susceptible to microbial contamination or difficult to sterilize, and having excellent quality with the taste, nutritional value, and texture of hot pot rice because the issue of reduced rice quality that can occur due to strict sterilization does not occur.

In addition, the method for preparing the instant rice according to the present application, compared to a general method for the preparation of instant rice, has advantages in terms of cost and microbial safety by using a new preparing principle to minimize changes in quality by reducing the number of heating times, and to simplify the time or steps to be performed by maintaining sterile conditions.

However, the effects of the present application are not limited to the effects described above, and other effects not described will be clearly understood by those skilled in the art from the following description.

[Description of Drawings]

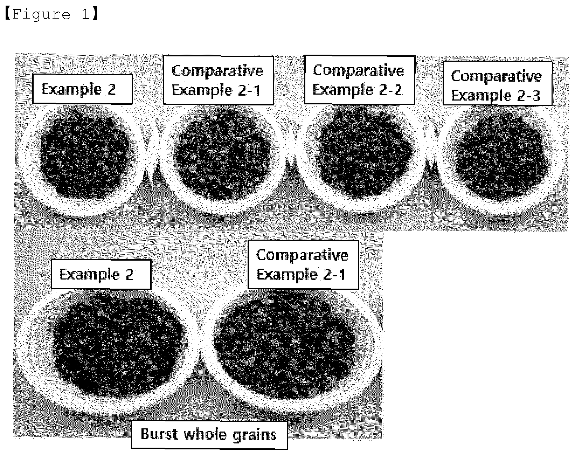

FIG. 1 is a diagram of comparing the grain appearances in whole grain rice (Example 2) of the present application and whole grain rice of Comparative Examples 2-1 to 2-3, wherein it can be confirmed that in the instant rice of Comparative Example 2-1, many whole grains with burst surfaces are found, but almost no surface bursting phenomenon occur in the instant rice of Example 2.

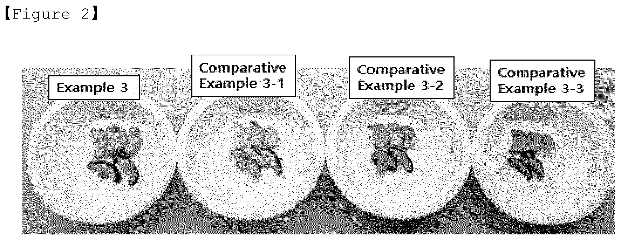

FIG. 2 is a diagram of comparing king oyster mushroom appearances in mushroom nutritious rice (Example 3) of the present application and mushroom nutritious rice of Comparative Examples 3-1 to 3-3, wherein it can be confirmed that the king oyster mushroom of Example 3 has a relatively bright color.

[Best Mode]

Hereinafter, the present application will be described in detail by the Examples.

However, the following Examples specifically illustrate the present application in detail, and the contents of the present application are not limited by the following Examples.

**[Examples and Comparative Examples]**

**Examples 1-1 and 1-2: White rice Bap**

A white rice Bap was prepared using white rice as a raw ingredient according to a method for preparing an instant rice of the present application. Specifically, 110 g of white rice was first washed with water, immersed, and then filled into a container. The container filled with 110 g of the immersed rice was moved to an RIC device (manufactured by Hisaka Seisakusho company), and a steam pressure sterilization was performed at a temperature of 130°C for 1 minute and 30 seconds in a vacuum state. The sterilization condition corresponds to a sterilization condition in which an F0 value is 4 or more. After the sterilization was completed, 95 g of sterilized water was added to the container, and then the container was sealed with a lid material to prevent external microorganisms or foreign substances from being introduced into the container. The sealed container was moved to a retort sterilization device and heated at a temperature of 115°C for 20 minutes to prepare instant rice of Example 1-1. The temperature and time conditions of the device correspond to relatively less strict conditions compared to conventional retort sterilization conditions.

In addition, an instant rice of Example 1-2 was prepared through all the same process as Example 1-1, except that in the sterilizing step, instead of sterilizing using an RIC device, a pressure sterilization was performed by repeatedly heating 8 times at a temperature of 148°C for 6 seconds. The pressure sterilization condition also corresponds to a sterilization condition in which an F0 value is 4 or more.

**Comparative Examples 1-1 to 1-4: White rice Bap**

An instant rice of Comparative Examples 1-1 to 1-4 was prepared using white rice as a raw ingredient. The instant rice of Comparative Examples 1-1 and 1-2 was prepared through the same method as in Example 1-1 above, except as prepared by varying heating conditions after sealing the container. The instant rice of Comparative Example 1-3 was prepared in the same manner as in Example 1-1, except as prepared by further including a cooking process before the container sealing step after the sterilization step. The white rice of Comparative Examples 1-4 was prepared using a conventional method of preparing rice at home.

The instant rice of Comparative Example 1-1 was completed by performing the same method as in Example 1-1 until the container sealing step, except as prepared by steaming the sealed container at a temperature of 95°C or lower, specifically heating at a temperature of 85°C for 20 minutes, instead of the heating step of Example 1-1.

The instant rice of Comparative Example 1-2 was prepared under a conventional retort heat sterilization condition by performing the same method as in Example 1-1 until the container sealing step, except as prepared by heating the sealed container in a retort sterilization device at a temperature of 123°C for 18 minutes, instead of the heating step of Example 1-1.

In Comparative Example 1-3, after performing a steam pressure sterilization at 130°C for 1 minute and 30 seconds in the same manner as in Example 1-1, a cooking process was further performed again by adding and heating sterilized water to a temperature of 98°C for 35 minutes. This corresponds to a process performed in a conventionally known instant rice preparing process. After the cooking step, the instant rice of Comparative Examples 1-3 was prepared through the same heating step as in Example 1 by sealing and heating the container in a retort sterilization device at 115°C for 20 minutes.

In Comparative Example 1-4, white rice was prepared according to a conventional preparing method of white rice prepared at home, and specifically, by washing 300 g of white rice with water, removing the water, placing the white rice in a rice cooker, and adding 420 g of cooking water, the rice was cooked and prepared under pressure cooking conditions.

### Example 2: Whole grain rice

Whole grain rice of Example 2 was prepared using various whole grains other than white rice as raw ingredients, according to the method for preparing instant rice of the present application. Specifically, non-glutinous brown rice, glutinous brown rice, black rice, whole wheat, and oats were used as raw ingredients, and a mixing ratio of each raw ingredient was listed in Table 1 below. The raw ingredients were washed with water, immersed, and then filled into a container. The filled container was moved to an RIC device (manufactured by Hisaka Seisakusho Co., Ltd.), and a steam pressure sterilization was performed at a temperature of 130°C for 5 minute and 30 seconds in a vacuum state. The sterilization condition corresponds to a sterilization condition in which an F0 value is 4 or more. After the sterilization of the raw ingredients was completed, sterilized water was added to be finally mixed in a ratio according to Table 1 below.

[Table 1]

| Raw ingredients | Mixing ratio (%) |
| --- | --- |
| Non-glutinous brown rice | 8.05 |
| Glutinous brown rice | 14.09 |
| Black rice | 6.04 |
| Whole wheat | 6.04 |
| Oats | 6.04 |
| Water | 59.74 |
| Total | 100.00 |

After adding water to the container, the container was sealed with a lid material to prevent external microorganisms or foreign substances from being introduced into the container. The sealed container was moved to a retort sterilization device and heated by setting conditions of a temperature of 115°C for 20 minutes to prepare an instant rice of Example 2. The temperature and time conditions of the device correspond to relatively less strict conditions compared to conventional retort sterilization conditions.

### Comparative Examples 2-1 to 2-3: Whole grain rice

Whole grain rice of Comparative Examples 2-1 to 2-3 was prepared using raw ingredients mixed in the mixing ratio according to Table 1 above. An instant rice was prepared in the same manner as the method for preparing the whole grain rice in Example 2 above, except that some conditions were varied.
The instant rice of Comparative Example 2-1 was completed by performing the same method as in Example 2 until the container sealing step, except as prepared by steaming the sealed container at a temperature of 95°C or lower, specifically heating at a temperature of 85°C for 20 minutes, instead of the heating step of Example 2.
The instant rice of Comparative Example 2-2 was prepared under a conventional retort heat sterilization condition by performing the same method as in Example 2 until the container sealing step, except as prepared by heating the sealed container in a retort sterilization device at a temperature of 123°C for 18 minutes, instead of the heating step of Example 2.
In Comparative Example 2-3, after performing a steam pressure sterilization at 130°C for 5 minute and 30 seconds in the same manner as in Example 2, a cooking process was further performed by adding and heating sterilized water to a temperature of 98°C for 35 minutes again. This corresponds to a process performed in a conventionally known instant rice preparing process. In Comparative Examples 2-3, after the cooking step, by sealing and heating the container in a retort sterilization device at 115°C for 20 minutes, an instant rice was prepared through the same heating step as in Example 2.

### Example 3: Mushroom nutritious rice

Mushroom nutritious rice of Example 3 was prepared using grains other than white rice and various mushrooms as raw ingredients according to the method for preparing instant rice of the present application. Specifically, non-glutinous rice, glutinous rice, black rice, shiitake mushroom, and king oyster mushroom were used as the raw ingredients, and corn oil was added to the raw ingredients washed with water to be filled into the container.
The mixing ratio of each raw ingredient was listed in Table 2 below. The filled container was moved to an RIC device (manufactured by Hisaka Seisakusho company), and a steam pressure sterilization was performed at a temperature of 130°C for 5 minute and 30 seconds in a vacuum state. The sterilization condition corresponds to a sterilization condition in which an F0 value is 4 or more.

[Table 2]

| Raw ingredients | Mixing ratio (%) |
|---|---|
| Non-glutinous rice | 47.6 |
| Glutinous rice | 11.9 |
| Black rice | 3.9 |
| Shiitake mushroom | 17.5 |
| King oyster mushroom | 17.5 |
| Corn oil | 1.6 |
| Total | 100.00 |

Then, sterilized shiitake hot water extract, refined salt, and water were added to the raw ingredients sterilized with RIC. In this case, the shiitake hot water extract, refined salt, and water may also be sterilized using a conventional heat sterilization method, but when using a sterilization method (130°C, 6 minutes) using a direct steam injection heater (DSI), a better microbial sterilization effect may be expected. Thereafter, the container was sealed with a lid material to prevent external microorganisms or foreign substances from being introduced into the container. The sealed container was moved to a retort sterilization device and heated by setting conditions of a temperature of 115°C for 20 minutes to prepare instant rice of Example 3. The temperature and time conditions of the device correspond to a relatively less strict condition compared to conventional retort sterilization conditions.

## Comparative Examples 3-1 to 3-3: Mushroom nutritious rice

Mushroom nutritious rice of Comparative Examples 3-1 to 3-3 was prepared using raw ingredients mixed in the mixing ratio according to Table 2 above. The instant rice was prepared in the same manner as the method for preparing the mushroom nutritious rice in Example 3, except that some conditions were varied.
The instant rice of Comparative Example 3-1 was completed by performing the same method as in Example 3 until the container sealing step, except as prepared by steaming the sealed container at a temperature of 95°C or lower, specifically, heating at a temperature of 85°C for 20 minutes, instead of the heating step of Example 3.
The instant rice of Comparative Example 3-2 was prepared under the conventional retort heat sterilization conditions by performing the same method as in Example 3 until the container sealing step, except as prepared by heating the sealed container in a retort sterilization device at a temperature of 123°C for 18 minutes, instead of the heating step of Example 3.
In Comparative Example 3-3, after performing a steam pressure sterilization at 130°C for 5 minute and 30 seconds in the same manner as in Example 3, a cooking process was further performed by adding and heating sterilized water to a temperature of 98°C for 35 minutes again. This corresponds to a process performed in a conventionally known instant rice preparing process. After the cooking step, the instant rice of Comparative Examples 3-3 was prepared through the same heating step as in Example 3 by sealing and heating the container in a retort sterilization device at 115°C for 20 minutes.

## Example 4: Honey glutinous rice

Honey glutinous rice of Example 4 was prepared using liquid sauces such as honey, soy sauce and syrup, and various raw ingredients according to the method for preparing instant rice of the present application. Specifically, non-glutinous rice, glutinous rice, sugared chestnuts, pumpkin seeds, raisins, pine nuts and sesame oil were used as the raw ingredients, and corn oil was added to the raw ingredients washed with water to be filled into the container. The mixing ratio of each raw ingredient was listed in Table 3 below. The filled container was moved to an RIC device (manufactured by Hisaka Seisakusho company), and a steam pressure sterilization was performed at a temperature of 130°C for 5 minute and 30 seconds in a vacuum state. The sterilization condition corresponds to a sterilization condition in which an F0 value is 4 or more.

[Table 3]

| Raw ingredients | Mixing ratio (%) |
|---|---|
| Non-glutinous rice | 15.5 |
| Glutinous rice | 62.0 |
| Sugared chestnuts | 13.8 |
| Pumpkin seeds | 1.9 |
| Raisins | 2.9 |
| Pine nuts | 1.0 |
| Sesame oil | 1.0 |
| Corn oil | 1.9 |
| Total | 100.00 |

After sterilization of the raw ingredients was completed, a liquid sauce with a salt content of 0.9% and a sugar content of 28 brix was prepared by mixing cinnamon concentrate, dark soy sauce, honey, simple syrup, brown sugar, oligosaccharide HF and refined salt, which was sterilized to be added to the container. The liquid sauce was sterilized by directly injecting steam at a temperature of 130°C into the sauce using a direct steam injection heater (DSI) to raise the sauce temperature to 130°C and maintain the state for 6 minutes. After adding the liquid sauce, the container was sealed with a lid material to prevent external microorganisms or foreign substances from being introduced into the container. The sealed container was moved to a retort sterilization device and heated by setting conditions of a temperature of 115°C for 20 minutes to prepare the instant rice of Example 4. The temperature and time conditions of the device correspond to a relatively less strict condition compared to conventional retort sterilization conditions.

**Comparative Examples 4-1 and 4-2: Honey glutinous rice**

Honey glutinous rice of Comparative Examples 4-1 and 4-2 was prepared using raw ingredients mixed in the mixing ratio according to Table 3 above and a liquid sauce. An instant rice was prepared in the same manner as the method for preparing the honey glutinous rice in Example 4, except that some conditions were varied.

In Comparative Example 4-1, after performing the same method as in Example 4 until the container sealing step, a liquid sauce was sterilized and added through a general liquid sterilization method by heating at 100°C for 10 minutes or more. In addition, an instant rice was prepared under the conventional retort heat sterilization conditions by heating the sealed container in a retort sterilization device at a temperature of 123°C for 18 minutes, instead of the heating step in Example 4.

In Comparative Example 4-2, a liquid sauce was sterilized using a direct steam injection heater (DSI) under the same conditions as in Example 4 above, but the raw ingredients were sterilized by heating at 98°C for 20 minutes and then sterilized under the condition where F0 was less than 4. After adding the liquid sauce and then sealing the container, an instant rice was prepared under the conventional retort heat sterilization condition by heating the sealed container in a retort sterilization device at a temperature of 123°C for 18 minutes, instead of the heating step in Example 4.

**[Experimental Example 1]**

**[1-1] Comparison of chromaticity in white rice Bap**

The lid materials of the instant rice (white rice Bap) of Examples 1-1, Example 1-2, and Comparative Examples 1-1 to Comparative Examples 1-3, which were prepared using white rice as raw ingredients, were removed and their colors were measured and compared. In addition, the color of the white rice of Comparative Examples 1-4 prepared at home using a conventional cooking method was also measured and compared. For the colors, L, a, and b values were measured using an instrument manufactured by Konica Minolta company, and each value was measured three times, and average values thereof were shown in Table 4 below.

[Table 4]

| Before heating | L | a | b |
|---|---|---|---|
| Example 1-1 | 71.51 | -1.75 | 9.40 |

(continued)

| Before heating | L | a | b |
|---|---|---|---|
| Example 1-2 | 70.44 | -1.86 | 8.87 |
| Comparative Example 1-1 | 71.23 | -2.14 | 5.87 |
| Comparative Example 1-2 | 70.28 | -1.47 | 9.35 |
| Comparative Example 1-3 | 69.39 | -1.48 | 9.48 |

As a result, as can be seen in Table 4 above, in the instant rice of Example 1-1 of the present application, L value was measured to be the highest, and in the instant rice of Example 1-2, L value was measured to be lower than that of Comparative Example 1-1, but measured to be relatively high. In particular, in the instant rice of Examples 1-1 and 1-2 prepared by the preparing method of the present application, it was confirmed that L value of white rice was high as compared to the instant rice of Comparative Example 1-3.

In the case of the instant rice prepared using white rice as raw ingredients, the color of Bap shown immediately after the consumer who eats an instant rice removed the lid material corresponds to the appearance quality that may be immediately perceived by the consumer and thus has an important influence on preference, and among them, the L value related to brightness may act as an important role. In the process of preparing the Bap, the color of white rice is darkened due to heat to have a negative effect on preference. The instant rice of Example 1-1 prepared according to the preparing method of the present application had the highest L value and thus was not darkened greatly in color even during the heating process, and the instant rice of Example 1-2 also showed a relatively high L value. Thus, it could be identified that the method for preparing the instant rice of the present application may provide an instant rice with an appearance that meets the consumer's preference while not damaging the external appearance quality of the instant rice.

**[1-2] Analysis of cooked rice taste of white rice Bap**

With respect to the instant rice (white rice Bap) of Examples 1-1 and 1-2, and Comparative Examples 1-1 to 1-3 heated using a microwave and white rice of Comparative Example 1-4, the cooked rice taste values of each instant rice are shown in Table 5 below by measuring the appearance, hardness, glutinousness, balance, and palatability of rice grains using a taste meter (Tensipresser My Boy 2 system, Taketomo Electric company, Japan).

[Table 5]

|  | Appearance | Hardness | Glutinousness | Balance | Palatability |
|---|---|---|---|---|---|
| Example 1-1 | 5.7 | 6.8 | 5.8 | 5.7 | 64 |
| Example 1-2 | 4.8 | 7.3 | 5.0 | 4.8 | 59 |
| Comparative Example 1-1 | 3.3 | 8.0 | 3.6 | 3.3 | 49 |
| Comparative Example 1-2 | 5.2 | 7.3 | 5.3 | 5.0 | 60 |
| Comparative Example 1-3 | 6.1 | 6.8 | 6.2 | 6.0 | 66 |
| Comparative Example 1-4 | 5.2 | 7.1 | 5.5 | 5.2 | 61 |

As a result, the instant rice of Example 1-1 prepared by the preparing method of the present application generally exhibited higher or similar levels of taste values of each cooked rice compared to other instant rice, and the instant rice of Example 1-2 was also measured to have excellent hardness and glutinousness values.

**[1-3] Analysis of physical properties of white rice Bap**

With respect to the instant rice (white rice Bap) of Examples 1-1 and 1-2 and Comparative Examples 1-1 to 1-3 heated using a microwave and the white rice of Comparative Example 1-4, the hardness, elasticity, adhesiveness and glutinousness thereof were measured using a physical property analyzer (Tensipresser Analyzer, MyBoy, TAKETOMO Electric Incorporated).

Specifically, to measure the physical properties, texture profile analysis (TPA) was performed using a physical property analyzer, and a TPA curve obtained after 6 bites was used. Specifically, the load applied to the plunger was measured by placing each sample in a holder of a physical property analyzer, moving a 30 mm-high plunger at a constant force and speed of 2.0 mm/s to apply the force to the sample surface, and applying 24% compression of the sample thickness two times, 46% compression two times and 92% compression two time continuously and vertically. The hardness was measured by a peak value when the plunger applies 92% compression of the sample thickness, which represents the force required to chew and crush the Bap. The elasticity was measured by dividing a curve area at 920 compression by a curve area at 24% compression, which means that the higher the elasticity value, the higher the chewed elasticity of the Bap. The adhesiveness may be measured by a negative peak value when the plunger applies 92% compression to the sample, which represents the force at the moment of removing the plunger stuck to the sample, and means that the larger the measured value, the higher the adhesiveness. The glutinousness may be measured by a negative area when the plunger applies 920 compression to the sample, which represents a sustained sticking force. Each value was repeatedly measured 5 times, and then the average values thereof are calculated.

[Table 6]

|  | Hardness | Elasticity | Adhesiveness | Glutinousness |
|---|---|---|---|---|
| Example 1-1 | 36.89 | 44.54 | 48.89 | 51.19 |
| Example 1-2 | 22.54 | 33.85 | 49.59 | 52.63 |
| Comparative Example 1-1 | 56.59 | 47.19 | 30.67 | 33.39 |
| Comparative Example 1-2 | 25.48 | 36.53 | 49.91 | 51.89 |
| Comparative Example 1-3 | 26.69 | 38.00 | 56.88 | 65.85 |
| Comparative Example 1-4 | 38.46 | 43.88 | 30.26 | 38.62 |

As a result, as can be seen in Table 6, in the case of the instant rice of Comparative Example 1-1, it was measured to show an excessively high hardness and elasticity due to insufficient heat treatment required for sufficient gelatinization. In addition, the instant rice of Example 1-1 was measured to have hardness and elasticity values similar to those of the white rice of Comparative Example 1-4 prepared by a conventional cooking method. The hardness and elasticity of Bap tend to decrease when heat treatment is too excessive, and conversely, tend to increase when heat treatment is insufficient. In the instant rice of Comparative Examples 1-2 and 1-3, the hardness and elasticity were greatly reduced due to excessive heat treatment, but the instant rice of Example 1-1 prepared by the preparing method of the present application was measured to have higher hardness and elasticity and exhibited appropriate physical properties, and although the instant rice, it was confirmed that it has similar level of physical properties to those of the white rice of Comparative Examples 1-4 prepared by a conventional cooking method.

**[1-4] Sensory evaluation of white rice Bap**

The instant rice (white rice Bap) of Examples 1-1 and 1-2, and Comparative Examples 1-1 to 1-3 was heated using a microwave, and then an evaluation on various kinds of sensory qualities was performed by trained professional panels. The sensory quality was evaluated by color preference, taste/flavor strength, overall taste preference, texture preference, and glutinousness preference of the instant rice, and the result is shown in Table 7 below. The evaluation criteria for the sensory quality are as follows.

[Evaluation criteria]

Color preference: Provided that 1 point is a minimum value and 5 points are a maximum value, the higher the color preference, the higher the score.
Taste/flavor strength: Provided that 1 point is a minimum value and 5 points are a maximum value, it means that the higher the taste/flavor strength, the higher the score.
Overall taste preference: As it is an item to evaluate the overall taste, provided that 1 point is a minimum value and 5 points are a maximum value, it means that the better the overall taste preference, the higher the score.
Texture preference: Provided that 1 point is a minimum value and 5 points are a maximum value, it means that the higher the texture preference, the higher the score.
Glutinousness preference: Provided that 1 point is a minimum value and 5 points are a maximum value, it means that the higher the glutinousness preference, the higher the score.

[Table 7]

| | Color preference | Taste/flavor strength | Overall taste preference | Texture preference | Glutinousness preference |
|---|---|---|---|---|---|
| Example 1-1 | 4.5 | 1.5 | 3.5 | 3.2 | 3.7 |
| Example 1-2 | 4.5 | 1.4 | 3.5 | 3.2 | 3.7 |
| Comparative Example 1-1 | 4.6 | 1.3 | 3.6 | 3.6 | 3.3 |
| Comparative Example 1-2 | 3.5 | 2.3 | 2.7 | 2.3 | 3.0 |
| Comparative Example 1-3 | 2.7 | 2.3 | 2.3 | 2.3 | 2.6 |

As a result, the instant rice of Examples 1-1 and 1-2 was evaluated to have high preference in all of color, texture, glutinousness, and overall taste, and was also evaluated to have low taste and flavor strengths. The instant rice of Comparative Example 1-1 also received high evaluation in sensory evaluation, but was shown to have a similar level to the instant rice of Examples 1-1 and 1-2 prepared according to the preparing method of the present application.

**[Experimental Example 2]**

**[2-1] Comparison of chromaticity and appearance of whole grain rice**

The instant rice (whole grain rice) of Example 2 and Comparative Examples 2-1 to 2-3, which were prepared with whole grains such as brown rice, black rice, whole wheat, and oats as raw ingredients, was heated for 2 minutes using a microwave (700 W), and then the lid material was removed, and the colors thereof were measured, and the appearances thereof were compared. For the colors, L, a, and b values were measured using an instrument manufactured by Konica Minolta company, and each value was measured three times, and average values thereof were shown in Table 8 below.

[Table 8]

| | L | a | b |
|---|---|---|---|
| Example 2 | 22.62 | 5.42 | 4.34 |
| Comparative Example 2-1 | 22.16 | 5.28 | 3.97 |
| Comparative Example 2-2 | 22.67 | 5.92 | 5.03 |
| Comparative Example 2-3 | 22.76 | 6.21 | 5.46 |

As a result, as can be seen in Table 8, the instant rice of Example 2 of the present application was measured to have a color similar to that of the instant rice of other Comparative Examples 2-1 to 2-3. Unlike the experimental results of white rice Bap, the whole grain rice did not show significant difference in color, including L value. However, as a result of observing the appearance, in the instant rice of Comparative Example 2-1, more grains, whose surfaces were burst and thus appeared white, were shown (FIG. 1). This is expected to be a result that the temperature conditions were too low in the method for preparing the instant rice in Comparative Example 2-1, and thus the outer skin of the grain was not softened, but only the interior absorbed moisture and swelled. In contrast, in the instant rice of Example 2 prepared according to the method for preparing the instant rice of the present application, since the same phenomenon as in Comparative Example 2-1 was not observed, it was indirectly confirmed that superior features in appearance quality were shown and the whole grain rice was sufficiently cooked.

**[2-2] Analysis of cooked grain taste of whole grain rice**

With respect to instant rice (whole grain rice) of Example 2 and Comparative Examples 2-1 to 2-3 heated using a microwave, the cooked grain taste values of each instant rice are shown in Table 9 below by measuring the appearance, hardness, glutinousness, balance, and palatability of the rice grains using a taste meter (Tensipresser My Boy 2 system, Taketomo Electric Company, Japan).

[Table 9]

|  | Appearance | Hardness | Glutinousness | Balance | Palatability |
|---|---|---|---|---|---|
| Example 2 | 4.4 | 9.8 | 4.8 | 2 | 43 |
| Comparative Example 2-1 | 3.5 | 9.8 | 4.7 | 1.2 | 39 |
| Comparative Example 2-2 | 3.7 | 9.8 | 4.7 | 1.4 | 40 |
| Comparative Example 2-3 | 3.8 | 9.8 | 4.7 | 1.4 | 40 |

As a result, it was confirmed that the instant rice of Example 2 prepared by the preparing method of the present application was measured to have the highest value in all of appearance, hardness, glutinousness, and balance, compared with the instant rice of the Comparative Examples prepared by other methods, and thus it has the highest palatability value.

**[2-3] Analysis of physical properties of whole grain rice**

With respect to the instant rice (whole grain rice) of Example 2 and Comparative Examples 2-1 to 2-3 heated using a microwave, the hardness, elasticity, adhesiveness, and glutinousness thereof were measured using a physical property analyzer (Tensipresser Analyzer, MyBoy, TAKETOMO Electric Incorporated) in the same method as Experimental Example 1-3, and are shown in Table 10 below.

[Table 10]

|  | Hardness | Elasticity | Adhesiveness | Glutinousness |
|---|---|---|---|---|
| Example 2 | 26.32 | 34.17 | 29.77 | 23.49 |
| Comparative Example 2-1 | 23.95 | 39.14 | 26.36 | 22.70 |
| Comparative Example 2-2 | 14.22 | 27.30 | 32.25 | 23.25 |
| Comparative Example 2-3 | 20.06 | 32.99 | 29.49 | 21.40 |

As a result, as can be seen in Table 10 above, the instant rice of Example 2 was measured to have a hardness value higher than that of the instant rice of Comparative Examples 2-1 to 2-3. The hardness is an important physical property in determining the texture of Bap, and the instant rice of Comparative Examples 2-2 and 2-3 was measured to have low hardness by applying excessive heat, and the instant rice of Comparative Example 2-1 was observed that low level of heat was applied thereto, but the burst phenomenon of rice grain occurs as confirmed in Experimental Example 2-1 and FIG. 1, so it is expected to have lowered hardness. In contrast, in the case of Example 2 prepared according to the method for preparing the instant rice of the present application, it was confirmed that although the sterilization was performed through sufficient heating, the hardness was not lowered and the quality was maintained by maintaining the inact state of rice grains.

**[2-4] Sensory evaluation of whole grain rice**

The instant rice (whole grain rice) of Example 2 and Comparative Examples 2-1 to 2-3 was heated using a microwave, and then an evaluation on various kinds of sensory qualities was performed by trained professional panels. The sensory quality was evaluated by color preference, taste/flavor strength, overall taste preference, texture preference, and glutinousness preference of the instant rice in the same manner as in Experimental Example 1-4, and the result is shown in Table 11 below.

[Table 11]

|  | Color preference | Taste/flavor strength | Overall taste preference | Texture preference | Glutinousness preference |
|---|---|---|---|---|---|
| Example 2 | 4.3 | 1.3 | 4.0 | 4.0 | 4.0 |
| Comparative Example 2-1 | 3.0 | 1.3 | 2.7 | 2.7 | 2.7 |

(continued)

|  | Color preference | Taste/flavor strength | Overall taste preference | Texture preference | Glutinousness preference |
|---|---|---|---|---|---|
| Comparative Example 2-2 | 4.1 | 1.3 | 4.0 | 4.0 | 3.7 |
| Comparative Example 2-3 | 3.9 | 1.3 | 3.3 | 3.2 | 3.7 |

As a result, when compared with the whole grain rice of the Comparative Examples, the whole grain rice of Example 2 was measured to have the highest level in color preference, texture preference, and glutinousness preference, and even in the taste/flavor strength, the whole grain rice of Example 2 and Comparative Examples was also measured to have similar level and have no difference. Accordingly, it was confirmed that the whole grain rice of Example 2 prepared according to the preparing method of the present application exhibited superior sensory quality compared to Bap prepared through other methods.

**[Experimental Example 3]**

**[3-1] Comparison of chromaticity and appearance of mushroom nutritious rice**

The instant rice (mushroom nutritious rice) of Example 3 and Comparative Examples 3-1 to 3-3 prepared with mushrooms such as king oyster mushroom and shiitake mushroom as raw ingredients was heated for 2 minutes using a microwave (700 W), and then the lid material was removed, and the colors of the king oyster mushroom were measured, and the appearances thereof were compared. For the colors, L, a, and b values were measured using an instrument manufactured by Konica Minolta company, and each value was measured three times, and average values thereof are shown in Table 12 below.

[Table 12]

|  | L | a | b |
|---|---|---|---|
| Example 3 | 59.60 | 3.39 | 16.08 |
| Comparative Example 3-1 | 59.83 | 2.73 | 14.97 |
| Comparative Example 3-2 | 46.35 | 5.38 | 15.12 |
| Comparative Example 3-3 | 46.95 | 5.84 | 16.68 |

As a result, as can be seen in Table 12 above, the color of the king oyster mushroom contained in the instant rice of Example 3 of the present application was measured to have L value higher than the king oyster mushrooms in the instant rice of Comparative Examples 3-2 and 3-3. In the case of the method of Comparative Examples 3-2 and 3-3, as high-temperature heating process is involved, the color of the mushrooms became excessively dark, but in the instant rice of Example 3 prepared according to the method of the present application, it was confirmed that the colors of king oyster mushrooms remain bright even after heating. It was confirmed that such a color change was shown identically even in the results of visually observing the appearance of the mushroom, and the king oyster mushrooms of Comparative Examples 3-2 and 3-3 showed excessively dark colors (FIG. 2).

**[3-2] Analysis of cooked grain taste of mushroom nutritious rice**

With respect to instant rice (mushroom nutritious rice) of Example 3 and Comparative Examples 3-1 to 3-3 heated using a microwave, a cooked grain taste value of each instant rice was measured in the appearance, hardness, glutinousness, balance, and palatability of the rice grains using a taste meter (Tensipresser My Boy 2 system, Taketomo Electric Co., Japan), and the result is shown in Table 13 below.

[Table 13]

|  | Appearance | Hardness | Glutinousness | Balance | Palatability |
|---|---|---|---|---|---|
| Example 3 | 3.8 | 9.88 | 4.9 | 2.3 | 45 |

(continued)

| | Appearance | Hardness | Glutinousness | Balance | Palatability |
|---|---|---|---|---|---|
| Comparative Example 3-1 | 1.5 | 9.8 | 3.5 | 0.2 | 31 |
| Comparative Example 3-2 | 2.9 | 9.8 | 4.4 | 1.4 | 39 |
| Comparative Example 3-3 | 3.5 | 9.8 | 5.7 | 1.9 | 43 |

As a result, the instant rice of Example 3 prepared through the preparing method of the present application was measured to have the highest values in the appearance, hardness, and balance values compared to the instant rice of the Comparative Examples prepared through other methods, and also measured to have the glutinousness higher than the mushroom nutritious rice of Comparative Examples 3-1 and 3-2, so it was confirmed that it has the highest palatability value.

### [3-3] Analysis of physical properties of mushroom nutritious rice

With respect to the instant rice (mushroom nutritious rice) of Example 3 and Comparative Examples 3-1 to 3-3 heated using a microwave, the texture strength (max stress), area and thickness of the king oyster mushroom were measured using a physical property analyzer (Tensipresser Analyzer, MyBoy, TAKETOMO Electric Incorporated), and the result is shown in Table 14 below. Specifically, a TPA curve obtained after one bite one time on the sample using a 3 $cm^2$ circular plunger was used. In this case, the distance between the plunger and the sample was set to 30 mm, and the sample was measured by compression at a speed of 2 mm/sec until reaching 5 mm from the bottom. The max stress value was measured as the highest point of the curve when compressed, which means the hardness of a general sample. In addition, the area was measured as the cumulative force until reaching the highest point.

[Table 14]

| | Max stress (dyn/cm2) | Area (erg/cm3) | Initial thickness (mm) | Thickness (mm) |
|---|---|---|---|---|
| Example 3 | 181250 | 22975 | 10 | 7.90275 |
| Comparative Example 3-1 | 229500 | 30000 | 10 | 8.18375 |
| Comparative Example 3-2 | 154000 | 16175 | 10 | 7.34575 |
| Comparative Example 3-3 | 122075 | 15945 | 10 | 7.63775 |

As a result, as can be seen in Table 14, the king oyster mushroom included in the instant rice of Example 3 was measured to have the highest thickness compared to the mushrooms of Comparative Examples 3-2 and 3-3, and it was confirmed that less shrinkage occurred in the mushroom. In the case of Comparative Example 3-1, it is expected that the applied heat is small, and thus the thickness is maintained relatively better. Even in the max stress value indicating texture strength, it was confirmed that the value of king oyster mushroom included in the instant rice of Example 3 was shown to be the highest, except for Comparative Example 3-1, but the texture of the king oyster mushroom was maintained better than in Comparative Examples 3-2 and 3-3 applied with more heat.

### [3-4] Sensory evaluation of mushroom nutritious rice

The instant rice (mushroom nutritious rice) of Example 3 and Comparative Examples 3-1 to 3-3 was heated using a microwave, and then various kinds of sensory qualities were evaluated by trained professional panels. The sensory quality was evaluated by color preference, taste/flavor strength, overall taste preference, texture preference, and glutinousness preference of the instant rice in the same manner as in Experimental Example 1-4, and the result is shown in Table 15 below.

[Table 15]

| | Mushroom color preference | Taste/flavor strength | Overall taste preference | Mushroom texture preference | Glutinousness preference |
|---|---|---|---|---|---|
| Example 3 | 4.3 | 1.0 | 4.1 | 4.5 | 4.3 |
| Comparative Example 3-1 | 4.8 | 1.0 | 3.8 | 4.5 | 3.6 |
| Comparative Example 3-2 | 3.2 | 1.3 | 3.6 | 3.6 | 4.0 |
| Comparative Example 3-3 | 2.4 | 1.1 | 3.5 | 3.3 | 4.0 |

As a result, the mushroom nutritious rice of Example 3 was measured to have the highest level in the texture preference, overall taste preference, and glutinousness preference when compared to the mushroom nutritious rice of the Comparative Examples, and was evaluated to be generally high even in the color preference. The taste/favor strength was evaluated as the lowest in the mushroom nutritious rice of Example 3. Accordingly, it was confirmed that the mushroom nutritious rice of Example 3 prepared according to the preparing method of the present application exhibited superior sensory quality to rice prepared through other methods.

**[Experimental Example 4]**

**[4-1] Comparison of chromaticity of honey glutinous rice**

The lid material of the instant rice (honey glutinous rice) of Example 4, and Comparative Examples 4-1 and 4-2 prepared by adding the liquid sauce such as honey and soy sauce was removed and the colors thereof were measured and compared. In addition, the instant rice of Examples 4, and Comparative Examples 4-1 and 4-2 was heated using a microwave (700 W) for 2 minutes, and then the lid material was removed, and the colors thereof were measured and compared. For the colors, L, a, and b values were measured using an instrument manufactured by Konica Minolta company, and each value was measured three times, and average values thereof are shown in Tables 16 and 17 below, respectively.

[Table 16]

| Before heating | L | a | b |
|---|---|---|---|
| Example 4 | 34.57 | 5.92 | 14.03 |
| Comparative Example 4-1 | 33.13 | 5.84 | 13.40 |
| Comparative Example 4-2 | 36.17 | 5.92 | 13.88 |

[Table 17]

| After heating | L | a | b |
|---|---|---|---|
| Example 4 | 27.91 | 6.67 | 10.45 |
| Comparative Example 4-1 | 26.51 | 6.47 | 10.08 |
| Comparative Example 4-2 | 28.16 | 6.83 | 11.02 |

As a result, as can be seen in Tables 16 and 17 above, in the case of the honey glutinous rice in Example 4 of the present application, L value was measured to be relatively low and b value was measured to be high. The honey glutinous rice of Example 4 prepared according to the preparing method of the present application may be distinguished from the honey glutinous rice of Comparative Examples 4-1 and 4-2 in terms of color.

**[4-2] Analysis of cooked grain taste of honey glutinous rice**

With respect to instant rice (honey glutinous rice) of Example 4 and Comparative Examples 4-1 to 4-2 heated using a microwave, a cooked grain taste value of each instant rice was measured in the appearance, hardness, glutinousness, balance, and palatability of the rice grains using a taste meter (Tensipresser My Boy 2 system, Taketomo Electric Co., Japan), and the result is shown in Table 18 below.

[Table 18]

|  | Appearance | Hardness | Glutinousness | Balance | Palatability |
|---|---|---|---|---|---|
| Example 4 | 8.4 | 9.4 | 9.8 | 7.3 | 74 |
| Comparative Example 4-1 | 8.7 | 9.0 | 9.8 | 7.5 | 78 |
| Comparative Example 4-2 | 8.7 | 8.9 | 9.8 | 7.4 | 77 |

As a result, in the instant rice of Example 4 prepared according to the preparing method of the present application, the hardness and glutinousness values were measured to be the highest compared to the instant rice of the Comparative Example prepared through other methods.

**[4-3] Analysis of physical properties of honey glutinous rice**

With respect to the instant rice (honey glutinous rice) of Example 4 and Comparative Examples 4-1 to 4-2 heated using a microwave, the hardness, elasticity, adhesiveness, and glutinousness of the Bap were measured using a physical property analyzer (Tensipresser Analyzer, MyBoy, TAKETOMO Electric Incorporated) in the same method as Experimental Example 1-3, and the result is shown in Table 19 below.

[Table 19]

|  |  | Hardness | Elasticity | Adhesiveness | Glutinousness |
|---|---|---|---|---|---|
| Example 4 | 1 | 32.04 | 57.30 | 30.99 | 92.82 |
|  | 2 | 27.42 | 54.17 | 33.92 | 70.89 |
|  | 3 | 18.67 | 44.36 | 38.15 | 103.64 |
|  | 4 | 26.64 | 54.59 | 29.63 | 96.46 |
|  | 5 | 20.53 | 49.50 | 30.84 | 69.27 |
|  | Average | 25.06 | 51.98 | 32.71 | 86.62 |
|  | Deviation | 5.43 | 5.10 | 3.43 | 15.60 |
| Comparative Example 4-1 | 1 | 35.74 | 64.95 | 35.03 | 153.97 |
|  | 2 | 31.98 | 60.28 | 29.18 | 69.40 |
|  | 3 | 24.23 | 50.00 | 37.32 | 92.12 |
|  | 4 | 94.55 | 99.83 | 23.37 | 113.30 |
|  | 5 | 36.48 | 58.04 | 27.33 | 66.25 |
|  | Average | 44.60 | 66.62 | 30.45 | 99.01 |
|  | Deviation | 28.34 | 19.34 | 5.69 | 36.13 |

(continued)

|  |  | Hardness | Elasticity | Adhesiveness | Glutinousness |
|---|---|---|---|---|---|
| Comparative Example 4-2 | 1 | 28.87 | 59.41 | 37.55 | 106.77 |
|  | 2 | 20.45 | 48.85 | 36.58 | 112.24 |
|  | 3 | 33.98 | 66.04 | 34.97 | 75.73 |
|  | 4 | 57.00 | 105.50 | 21.57 | 75.08 |
|  | 5 | 37.37 | 57.92 | 28.52 | 80.35 |
|  | Average | 35.53 | 67.54 | 31.84 | 90.03 |
|  | Deviation | 13.59 | 22.09 | 6.73 | 17.99 |

As a result, in the case of the honey glutinous rice of Example 4 prepared according to the preparing method of the present application, the measured result values of 1 to 5 samples were relatively uniform and a deviation therebetween was not large, but in the case of the honey glutinous rice of Comparative Examples 4-1 to 4-2, it was confirmed that a deviation in the measured values of physical properties for each sample was very large. In particular, the hardness and elasticity measured values of the honey glutinous rice in Comparative Examples 4-1 and 4-2 showed very large deviations, but the reason why the deviation between physical property values of the honey glutinous rice of Comparative Examples 4-1 and 4-2 was shown so large is expected to be due to the deviation in texture that occurs due to strong retort heat sterilization treatment. This property is shown prominently in the honey glutinous rice of Comparative Examples 4-1 and 4-2 having a high content of glutinous rice ingredients, and since the honey glutinous rice according to Example 4 does not have a relatively large deviation in physical properties, it was confirmed that when the preparing method of the present application is used, an instant rice having consistent texture and quality can be prepared.

### [4-4] Sensory evaluation of honey glutinous rice

The instant rice (honey glutinous rice) of Example 4 and Comparative Examples 4-1 to 4-2 was heated using a microwave, and then various kinds of sensory qualities were evaluated by trained professional panels. The sensory quality was evaluated by color preference, taste/flavor strength, overall taste preference, texture preference, and glutinousness preference of instant rice in the same manner as in Experimental Example 1-4, and the result is shown in Table 20 below.

[Table 20]

|  | Color preference | Taste/flavor strength | Overall taste preference | Texture preference | Glutinousness preference |
|---|---|---|---|---|---|
| Example 4 | 4.0 | 1.3 | 4.0 | 4.0 | 4.0 |
| Comparative Example 4-1 | 3.5 | 1.3 | 3.7 | 3.1 | 3.8 |
| Comparative Example 4-2 | 3.6 | 1.3 | 3.0 | 2.8 | 3.4 |

As a result, when compared with the honey glutinous rice of the Comparative Examples, since the honey glutinous rice of Example 4 was measured to show the highest level in all of the color preference, overall taste preference, texture preference, and glutinousness preference, it was confirmed that it exhibits superior sensory quality as compared with Bap prepared through other methods.

### [Experimental Example 5]

### Confirmation of nutritional ingredients of whole grain rice

The nutritional ingredients contained in the whole grain rice prepared in Example 2 were measured and confirmed. Based on the finished products of whole grain rice, mushroom nutritious rice and honey glutinous rice, the calories thereof and the contents of carbohydrates, proteins, fats, sugars, saturated fat, trans fat, cholesterol, sodium, ash and dietary fibers were measured by a conventional measurement method according to the Food Code. For example, the proteins were measured by a protein analyzer analysis method in the Food Code, and the dietary fibers were measured by a total dietary fiber analysis method in the Food Code. The nutritional ingredients of the instant rice are shown in Table 21 below. Even if the whole grain rice was prepared using only mixed grains without using white rice, sufficient sterilizing force and texture may be maintained, and thus, the protein content and dietary fiber content in the instant rice of the present application were able to be maintained at higher levels than the protein and dietary fiber contents in conventional instant rice.

[Table 21]

| Instant rice | | Whole grain rice |
|---|---|---|
| | | Content per 100 g |
| Calorie | kcal/100g | 158.82 |
| carbohydrate | g/100g | 32.85 |
| Protein | g/100g | 4.35 |
| Fat | g/100g | 1.12 |
| Sugars | g/100g | 0.32 |
| Saturated fat | g/100g | 0.26 |
| Trans fat | g/100g | 0.01 |
| Cholesterol | g/100g | 0.00 |
| Sodium | mg/100g | 0.64 |
| Ash | g/100g | 0.59 |
| Dietary fiber | g/100g | 3.51 |

**[Experimental Example 6]**

**Confirmation of the number of microorganisms in whole grain rice**

In order to confirm whether complete sterilization was performed in the whole grain rice product prepared by the preparing method of the present application, the number of microorganisms contained in the raw ingredients or product was measured for each step.
With respect to the whole grain rice according to Example 2, the number of general bacteria and the number of heat-resistant bacteria for each of the raw ingredients were first measured. The number of each bacterium was measured in non-glutinous brown rice, glutinous brown rice, black rice, whole wheat, and oats, and the number of microorganisms was measured in a mixed solid material sample mixed with them.
As a result, as shown in Table 22 below, it was measured that general bacteria were present above a certain level in the raw ingredients before going through the sterilization step, and at least 550,000 cfu/ml of general bacteria were present in the mixed solid material of the raw ingredients for preparing the instant rice.

[Table 22]

| Measuring sample | General bacteria (cfu/ml) | Heat-resistant bacteria (cfu/ml) |
|---|---|---|
| Non-glutinous brown rice | 4,200,000 | 0 |
| Glutinous brown rice | 420,000 | 0 |
| Black rice | 1,600,000 | 0 |
| Whole wheat | 1,800 | 0 |
| Oats | 11,000 | 0 |

(continued)

| Measuring sample | | General bacteria (cfu/ml) | Heat-resistant bacteria (cfu/ml) |
|---|---|---|---|
| Mixed solid material | Sample 1 | 550,000 | 0 |
| | Sample 2 | 1,100,000 | 0 |
| | Sample 3 | 1,400,000 | 0 |

After the raw ingredients were filled into the container, a steam pressure sterilization was performed at a temperature of 130°C for 5 minutes and 30 seconds in an RIC device according to the method of preparing the whole grain rice of Example 2, and then a sterilizing effect was confirmed through a microbiology challenge test (MCT). The MCT is a method of determining whether a product has process and distribution stability by artificially inoculating microorganisms and observing changes in order to check whether to control target bacteria during the actual process of the product. As general bacteria, an orange capsule (MesaLabs SASU-302) containing $10^6$ CFU/ml of Bacillus subtilis (ATCC 5230) which died under F0 condition of about 4 or less, was used, and as heat-resistant bacteria, a purple capsule (MesaLabs SA-608) containing $10^6$ CFU/ml of Geobacillus stearotrhermophilus (ATCC 7953) which died at an F0 of about 21 or less, was used. The raw ingredients sterilized with the RIC device using the capsules were cultured for up to 48 hours at a temperature of 35°C for the orange capsule and 55 to 60°C for the purple capsule, respectively, and then color changes were confirmed. If there was no color change, it is determined to be negative, and if the color was changed to yellow, it was determined to be positive (Table 23). As a result, it was confirmed that all microorganisms that existed in the raw ingredients before sterilization were killed as a result of a steam pressure sterilization using the RIC device, showing a sufficient sterilization effect.

[Table 23]

| Measuring sample | Sample name | MCT |
|---|---|---|
| RIC sterilized sample 1 | 4-carriage 1-stage 35°C | Negative |
| RIC sterilized sample 2 | 4-carriage 1-stage 55°C | Negative |
| RIC sterilized sample 3 | 4-carriage 7-stage 35°C | Negative |
| RIC sterilized sample 4 | 4-carriage 7-stage 55°C | Negative |
| RIC sterilized sample 5 | 4-carriage 12-stage 35°C | Negative |
| RIC sterilized sample 6 | 4-carriage 12-stage 55°C | Negative |

Furthermore, after the steam pressure sterilization, a finished instant rice product was prepared through water addition, sealing and additional heating processes, and bacterial growth experiments were conducted on the finished product. In the bacterial growth experiments, the instant rice product was stored at 35°C for 10 days, and then sampled to determine the growth of general bacteria and heat-resistant bacteria according to a common measurement method in the art (based on the bacterial growth experiments according to the general test method of the Ministry of Food and Drug Safety), each finished product sample was preserved in an incubator at a temperature of 35 to 37°C for at least 10 days, and then a specimen obtained from the sample was homogenized with a diluent and cultured in a culture medium at 35 to 37°C for 45 to 51 hours, and then bacterial growth was measured. As a result, as shown in Table 24 below, since no bacterial growth was observed in all 12 instant rice samples, which were shown as negative, despite the presence of a large amount of microorganisms in the raw ingredients, it was confirmed that all microorganisms were killed in the instant rice prepared through the preparing method of the present application through sufficient sterilization.

[Table 24]

| Measuring sample | Sample name (carriage-stage-number) | Bacterial growth |
|---|---|---|
| Finished product sample 1 | 3-2-1 | Negative |
| Finished product sample 2 | 3-2-1 | Negative |
| Finished product sample 3 | 3-2-1 | Negative |
| Finished product sample 4 | 3-2-7 | Negative |
| Finished product sample 5 | 3-2-7 | Negative |

(continued)

| Measuring sample | Sample name (carriage-stage-number) | Bacterial growth |
|---|---|---|
| Finished product sample 6 | 3-2-7 | Negative |
| Finished product sample 7 | 3-2-14 | Negative |
| Finished product sample 8 | 3-2-14 | Negative |
| Finished product sample 9 | 3-2-14 | Negative |
| Finished product sample 10 | 3-3-1 | Negative |
| Finished product sample 11 | 3-3-1 | Negative |
| Finished product sample 12 | 3-3-1 | Negative |

Hereinabove, representative Examples of the present application have been exemplarily described, but the scope of the present application is not limited to the specific Examples as described above, and can be changed appropriately by those skilled in the art within the scope described in the appended claims of the present application.

## Claims

1. A method for preparing an instant rice, comprising:

   sterilizing raw ingredients filled in a container under the condition of F0 value of 4 or higher;
   adding sterilized water or sterilized sauce to the sterilized raw ingredients;

   sealing a container added with the water or sauce; and
   heating the sealed container at a temperature of 90°C to 125°C for 10 minutes to 25 minutes.

2. The method for preparing instant rice of claim 1, wherein the raw ingredients comprise at least one selected from the group consisting of grains, beans, mushrooms, root and tuber crops, bulbs, seasoned vegetables, fruits/seeds, meats, fishes, and eggs.

3. The method for preparing instant rice of claim 2, wherein the grains comprise at least one selected from the group consisting of white rice, brown rice, barley, soybeans, red beans, foxtail millet, wheat, rye, wheat, buckwheat, oats, millet, corn, and sorghum.

4. The method for preparing instant rice of claim 2, wherein the mushrooms comprise at least one selected from the group consisting of king oyster mushroom, shiitake mushroom, oyster mushroom, button mushroom, and enoki mushroom.

5. The method for preparing instant rice of claim 2, wherein the fruits/seeds comprise at least one selected from the group consisting of jujubes, chestnuts, pine nuts, raisins, and pumpkin seeds.

6. The method for preparing instant rice of claim 2, wherein the raw ingredients have the number of microorganisms of $10^2$ cfu/ml to $10^8$ cfu/ml in the raw ingredients before sterilization.

7. The method for preparing instant rice of claim 1, wherein the sterilizing step is performed using at least one method selected from the group consisting of pressurized steam sterilization, vacuum pressurized steam sterilization, and ultra-high temperature sterilization.

8. The method for preparing instant rice of claim 1, wherein the sterilizing step is performed with steam at 120°C to 140°C for 1 minute to 10 minutes.

9. The method for preparing instant rice of claim 1, wherein the sterilizing step is performed by repeatedly contacting the raw ingredients 5 to 10 times with steam at 140°C to 155°C for 3 seconds to 10 seconds.

10. The method for preparing instant rice of claim 1, further comprising: immersing the raw ingredients in water before filling the raw ingredients in the container.

11. The method for preparing instant rice of claim 1, wherein in the adding of the sterilized water or sterilized sauce, the sterilization is performed for 6 to 8 minutes by directly spraying steam at 130°C to 140°C to the water or sauce.

12. The method for preparing instant rice of claim 1, wherein a cooking step is not comprised.

13. The method for preparing instant rice of claim 1, wherein heat of 90°C or higher is not applied before the sealing step after the sterilizing step.

14. The method for preparing instant rice of claim 1, wherein a temperature of 89°C or lower is maintained before the sealing step after the sterilizing step.

15. The method for preparing instant rice of claim 1, wherein the number of microorganisms in the raw ingredients measured after the heating step is 0 cfu/ml.

16. An instant rice prepared by the preparing method according to any one of claims 1 to 15.

【Figure 1】

【Figure 2】

## INTERNATIONAL SEARCH REPORT

| International application No. |
|---|
| **PCT/KR2022/006110** |

**A.    CLASSIFICATION OF SUBJECT MATTER**

**A23L 7/196**(2016.01)i; **A23L 31/00**(2016.01)i; **A23L 25/00**(2016.01)i; **A23L 3/10**(2006.01)i; **A23L 3/015**(2006.01)i; **B65B 55/14**(2006.01)i; **B65B 25/00**(2006.01)i

According to International Patent Classification (IPC) or to both national classification and IPC

**B.    FIELDS SEARCHED**

Minimum documentation searched (classification system followed by classification symbols)

A23L 7/196(2016.01); A23L 1/10(2006.01); A23L 7/10(2016.01); A47J 27/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 즉석밥(instant rice), 살균(sterilization), 실링(sealing), 가열(heating)

**C.    DOCUMENTS CONSIDERED TO BE RELEVANT**

| Category* | Citation of document, with indication, where appropriate, of the relevant passages | Relevant to claim No. |
|---|---|---|
| X | JP 09-187238 A (HISAKA WORKS LTD.) 22 July 1997 (1997-07-22) See abstract; paragraphs [0001], [0011] and [0032]; and figures 1 and 2. | 1-10,12-16 |
| Y | | 11 |
| Y | JP 60-224478 A (KUREHA KAKOKI KK) 08 November 1985 (1985-11-08) See pages 389 and 390. | 11 |
| A | KR 10-2015-0087556 A (HONG, Sung Pyo) 30 July 2015 (2015-07-30) See paragraphs [0017]-[0029]; claims 1-4; and figure 1. | 1-16 |
| A | JP 5794299 B2 (SATAKE ENG. CO., LTD. et al.) 14 October 2015 (2015-10-14) See paragraphs [0041]-[0043]; and figure 1. | 1-16 |
| A | KR 10-2001-0079456 A (WOOJUNG MULSAN CO., LTD.) 22 August 2001 (2001-08-22) See claim 1; and figure 1. | 1-16 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 August 2022** | **09 August 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2022/006110** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-0877474 B1 (CJ CHEILJEDANG CORPORATION) 07 January 2009 (2009-01-07)<br>See paragraph [0007]; and claim 1. | 1-16 |

**INTERNATIONAL SEARCH REPORT**
Information on patent family members

International application No.

**PCT/KR2022/006110**

| Patent document cited in search report | | | Publication date (day/month/year) | Patent family member(s) | | | Publication date (day/month/year) |
|---|---|---|---|---|---|---|---|
| JP | 09-187238 | A | 22 July 1997 | JP | 2826088 | B2 | 18 November 1998 |
| JP | 60-224478 | A | 08 November 1985 | JP | 04-043631 | B2 | 17 July 1992 |
| KR | 10-2015-0087556 | A | 30 July 2015 | KR | 10-1710660 | B1 | 28 February 2017 |
| JP | 5794299 | B2 | 14 October 2015 | CN | 103547169 | A | 29 January 2014 |
| | | | | ES | 2443865 | A2 | 20 February 2014 |
| | | | | ES | 2443865 | B2 | 27 April 2015 |
| | | | | ES | 2443865 | R1 | 10 March 2014 |
| | | | | KR | 10-1832722 | B1 | 27 February 2018 |
| | | | | KR | 10-2014-0047605 | A | 22 April 2014 |
| | | | | US | 2014-0109774 | A1 | 24 April 2014 |
| | | | | US | 9854825 | B2 | 02 January 2018 |
| | | | | WO | 2012-140700 | A1 | 18 October 2012 |
| KR | 10-2001-0079456 | A | 22 August 2001 | | None | | |
| KR | 10-0877474 | B1 | 07 January 2009 | CN | 101366481 | A | 18 February 2009 |
| | | | | JP | 2009-005674 | A | 15 January 2009 |
| | | | | JP | 4829851 | B2 | 07 December 2011 |
| | | | | US | 2009-0004361 | A1 | 01 January 2009 |
| | | | | US | 7931927 | B2 | 26 April 2011 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150105819